# FASCICULE DE BREVET EUROPEEN

(11) **EP 3 880 720 B1**
(45) Date de publication et mention de la délivrance du brevet: **28.12.2022**
(21) Numéro de dépôt: 19884682.6
(22) Date de dépôt: 14.11.2019
(51) Int. Cl.: C08F 120/06, C08K 5/1545, C08L 33/02, D21H 17/06, D21H 17/37, D21H 17/00, C09D 7/65, D21H 19/20, A61K 8/84

(54) **AGENT DISPERSANT OSIDIQUE**
OSIDISCHES DISPERGIERMITTEL
OSIDIC DISPERSING AGENT

(30) Priorité: 16.11.2018 FR 1871564
(43) Date de publication de la demande: 22.09.2021
(73) Titulaire: Coatex, 69730 Genay (FR)
(72) Inventeur: BONY, Francis, 69650 Quincieux (FR); LE NEINDRE, Morgane, 69100 Villeurbanne (FR); MAGNY, Benoît, 69270 Cailloux-sur-Fontaines (FR); MATTER, Yves, 01600 Reyrieux (FR); SUAU, Jean-Marc, 69480 Lucenay (FR)
(74) Mandataire: Balmefrezol, Ludovic Francis Pierre
(86) Numéro de dépôt international: PCT/FR2019/000185
(87) Numéro de publication internationale: WO 2020/099736

(56) Documents cités:
- WO-A1-2015/063402
- WO-A1-2018/109400
- FR-A1- 2 903 618
- US-A- 4 801 354

## Description

L'invention concerne le domaine des agents dispersants pour composition aqueuse, en particulier pour la dispersion d'un matériau minéral sous forme de particules. L'agent dispersant selon l'invention comprend un polymère dispersant combiné à un dérivé osidique ou d'origine saccharidique. L'invention concerne également une composition aqueuse comprenant cet agent dispersant et un matériau minéral sous forme de particules, ainsi que l'utilisation de cet agent ou de cette composition.

Une suspension aqueuse d'un matériau minéral est une dispersion de matériau solide peu soluble ou insoluble dans un milieu aqueux. Les caractéristiques recherchées pour une suspension dépendent généralement de la destination de cette suspension, notamment lors de l'utilisation du matériau minéral comme charge d'une composition, par exemple d'une composition pour sauce de couchage papetière ou d'une composition de revêtement.

Les caractéristiques d'une dispersion aqueuse de matériau minéral sous forme de particules peuvent être contrôlées, notamment au moyen d'un agent dispersant.

La viscosité et la stabilité de la dispersion aqueuse sont des propriétés importantes.

L'origine et les propriétés des agents dispersants de matériau minéral sous forme de particules peuvent varier largement. Notamment, cet agent peut être préparé à partir de produits d'origine naturelle. L'utilisation de produits renouvelables doit donc pouvoir être développée.

La compatibilité des agents dispersants, notamment avec les différents éléments présents dans une dispersion aqueuse de matériau minéral sous forme de particules, est également une propriété importante.

On connaît des agents dispersants de matériau minéral sous forme de particules. Toutefois, les agents connus ne permettent pas d'apporter de solutions satisfaisantes aux problèmes rencontrés lors de la dispersion de ces matériaux en milieu aqueux.

En particulier, les agents dispersants ne possèdent pas toujours de propriétés de dégradabilité, notamment des propriétés de biodégradabilité améliorées.

Les agents dispersants doivent également avoir une viscosité apparente contrôlée pour faciliter leur manipulation, leur transport ou leur introduction dans une composition aqueuse.

La réduction des quantités d'adjuvants, notamment de polymères dispersants, en particuliers de polymères dispersants de synthèse, utilisés dans des compositions aqueuses doit également être recherchée.

Le document EP 2044159 décrit un procédé de fabrication d'une suspension aqueuse de matières minérales au moyen d'un polymère d'acide acrylique ou d'acide méthacrylique et d'anhydride maléique. Le document US 4801354 divulgue des suspensions aqueuses de pigments destinées à la fabrication du papier. Elles contiennent un dispersant qui est un copolymère d'un ester d'acide (méth)acrylique et d'un alcool monohydrique ou dihydrique ainsi que d'un acide carboxylique. Le document WO 2018-109400 divulgue une méthode de préparation de particules de matière minérale par broyage en présence d'eau et d'un polymère préparé à partir d'au moins un monomère anionique et d'hypophosphite desodium ou de dipropionate trithiocarbonate disodique. Le document WO 2015-063402 concerne l'utilisation d'une solution de cellulose carboxylée dépolymérisée pour le broyage ou la dispersion de suspensions aqueuses de matière minérale.

L'agent dispersant selon l'invention permet d'apporter une solution à tout ou partie des problèmes rencontrés lors de l'utilisation des agents dispersants de l'état de la technique. Ainsi, l'invention, telle que définie dans les revendications, fournit un agent dispersant aqueux comprenant :
- au moins un polymère (P) préparé par au moins une réaction de polymérisation radicalaire, à une température supérieure à 50°C, d'au moins un monomère anionique (M1) comprenant au moins une insaturation oléfinique polymérisable et au moins une fonction acide carboxylique ou d'un de ses sels, en présence d'au moins un composé générateur de radicaux choisi parmi peroxyde d'hydrogène, benzoyl peroxyde, acétyl peroxyde, lauryl peroxyde, hydroperoxyde de tertiobutyle, cumène hydroperoxyde, persulfate d'ammonium, un persulfate de métal alcalin, un composé azoïque, leurs combinaisons et leurs associations respectives avec un ion choisi parmi Fe^{II}, Fe^{III}, Cu^{I}, Cu^{II} et leurs combinaisons ;
- au moins un dérivé (S) choisi parmi :
   ∘ un ose (S1) comprenant de 3 à 8 atomes de carbone ;
   ∘ un oligomère d'ose (S2) comprenant de 1 à 10 motifs en ose ;
   ∘ un produit (S3) issu de la dégradation d'un saccharide.

Selon l'invention, le polymère (P) est préparé par au moins une réaction de polymérisation radicalaire en présence d'au moins un composé générateur de radicaux. Ce composé peut notamment être un composé azoïque, par exemple un composé azoïque choisi parmi 2,2'-azobis(2-(4,5-dihydroimidazolyl)propane, dihydrochlorure de 2,2'-azobis(2-méthylpropionamidine), diazo-valero-nitrile, acide 4,4'-azobis-(4-cyanovalérique), AZDN ou 2,2'-azo-bis-isobutyronitrile.

De manière préférée selon l'invention, le composé générateur de radicaux est choisi parmi peroxyde d'hydrogène et persulfates de métal alcalin, en particulier persulfate de sodium et persulfate de potassium.

Outre un composé générateur de radicaux, la réaction de polymérisation peut également mettre en œuvre au moins un composé comprenant du phosphore au degré d'oxydation I. De préférence, ce phosphore au degré d'oxydation I est un composé choisi parmi l'acide hypophosphoreux (H₃PO₂) et un dérivé de l'acide hypophosphoreux (H₃PO₂). De manière plus préférée, ce composé comprend au moins un ion hypophosphite (H₂PO₂⁻). Plus préférentiellement, ce composé est choisi parmi hypophosphite de sodium (H₂PO₂Na), hypophosphite de potassium (H₂PO₂K), hypophosphite de calcium ([H₂PO₂]₂Ca) et leurs combinaisons.

Selon l'invention, la réaction de polymérisation peut également être mise en œuvre en présence d'au moins un composé comprenant un ion bisulfite, de préférence un composé choisi parmi bisulfite d'ammonium, un bisúlfite de métal alcalin, notamment bisulfite de sodium, bisulfite de potassium, bisulfite de calcium, bisulfite de magnésium et leurs combinaisons.

Selon l'invention, la réaction de polymérisation peut également être mise en œuvre en présence d'au moins un composé comprenant du phosphore au degré d'oxydation III, de préférence un composé choisi parmi l'acide phosphoreux et un dérivé de l'acide phosphoreux. Plus préférentiellement, ce composé comprend au moins un ion phosphite, notamment un composé choisi parmi phosphite de sodium, phosphite de calcium, phosphite de potassium, phosphite d'ammonium et leurs combinaisons.

Selon l'invention, la réaction de polymérisation peut également être mise en œuvre en présence de 0,05 à 5 % en poids, par rapport à la quantité totale de monomères, d'au moins un composé choisi parmi un dérivé xanthate, un composé mercaptan et un composé de formule (I) : 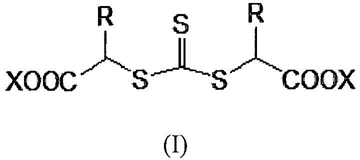 dans laquelle :
- X représente indépendamment H, Na ou K,
- R représente indépendamment un groupement C₁-C₅-alkyle, de préférence un groupement méthyl.

De préférence selon l'invention, le composé de formule (I) est le diisopropionate de trithiocarbonate disodique (DPTTC).

Selon l'invention, la réaction de polymérisation peut également être mise en œuvre en présence d'au moins un composé réducteur, par exemple d'un composé choisi parmi sulfate d'hydroxylamine, hydrate d'hydrazine et leurs combinaisons.

Selon l'invention, la réaction de polymérisation est mise en œuvre à une température supérieure à 50°C, en particulier à pression atmosphérique et à une température allant de 50 à 98°C ou de 75 à 99°C. De manière préférée, la réaction de polymérisation est mise en œuvre de 50 à 95°C ou de 50 à 85°C. La réaction de polymérisation peut également être mise en œuvre à une pression supérieure à la pression atmosphérique et à une température supérieure à 100°C, de préférence inférieure à 140°C.

Selon l'invention, la réaction de polymérisation est réalisée dans l'eau, dans un solvant, seul ou en mélange avec de l'eau, notamment un solvant alcoolique, en particulier alcool isopropylique. De préférence, elle est réalisée dans l'eau.

De manière préférée selon l'invention, le polymère (P) est, totalement ou partiellement, neutralisé, notamment à l'issue de la réaction de polymérisation.

Plus préférentiellement, la neutralisation du polymère (P) est réalisée au moyen d'au moins un dérivé choisi parmi un métal alcalin, un métal alcalino-terreux, un dérivé aminé, l'ammoniac, l'ammoniaque et leurs combinaisons. Plus préférentiellement, la neutralisation du polymère (P) est réalisée au moyen d'un dérivé comprenant au moins un élément choisi parmi lithium, sodium, calcium, magnésium et leurs combinaisons, par exemple NaOH, KOH, Ca(OH)₂, Mg(OH)₂, un dérivé aminé choisi parmi monoisopropylamine (AMP), triéthylamine, diéthylamine, monoéthylamine et leurs combinaisons.

Sodium, calcium et leurs combinaisons sont particulièrement préférés. La neutralisation au moyen de sodium et de calcium peut donc être réalisée en utilisant au moins un composé choisi parmi NaOH, KOH, Ca(OH)₂, Mg(OH)₂ et leurs combinaisons. Les proportions respectives de sodium et de calcium peuvent varier assez largement. Par exemple, le rapport molaire Na/Ca peut aller de 98/2 à 30/70, de préférence de 95/5 à 40/60, plus préférentiellement de 90/10 à 30/70 ou de 90/10 à 40/60, encore plus préférentiellement de 70/30 à 40/60, en particulier 50/50.

De manière préférée selon l'invention, le monomère anionique (M1) comprenant au moins une insaturation oléfinique polymérisable comprend une ou deux fonctions acides carboxyliques. Plus préférentiellement, il comprend une seule fonction acide carboxylique. Encore plus préférentiellement, il est choisi parmi acide acrylique, acide méthacrylique, un sel d'acide acrylique, un sel d'acide méthacrylique, acide itaconique, un sel d'acide itaconique et leurs combinaisons. Le monomère (M1) préféré est l'acide acrylique.

Selon l'invention, la réaction de polymérisation peut mettre en œuvre un ou plusieurs monomères (M1). Un autre monomère anionique (M1) peut alors être choisi parmi acide acrylique, acide méthacrylique, acide itaconique, acide maléique, anhydride maléique et leurs combinaisons.

Selon l'invention, la réaction de polymérisation peut mettre en œuvre, par rapport à la quantité totale en poids de monomères :
- 100 % en poids de monomère anionique (M1) ou
- de 50 % à 99,5 % ou de 70 % à 99,5 % en poids de monomère anionique (M1) et, respectivement, de 0,5 % à 50 % ou de 0,5 % à 30 % en poids d'au moins un autre monomère.

Outre le monomère (M1), la réaction de polymérisation peut donc également mettre en œuvre au moins un monomère (M2) non ionique comprenant au moins une insaturation oléfinique polymérisable, de préférence au moins une insaturation éthylénique polymérisable et notamment une fonction vinylique polymérisable.

Plus préférentiellement, le monomère non ionique (M2) est choisi parmi styrène, vinylcaprolactam, les esters d'un acide comprenant au moins une fonction acide monocarboxylique, en particulier un ester d'un acide choisi parmi acide acrylique, acide méthacrylique, et leurs combinaisons, par exemple hydroxyéthylacrylate, hydroxypropylacrylate, hydroxyéthylméthacrylate, hydroxypropylméthacrylate, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de C₁-C₁₀-alkyl, préférentiellement méthacrylate de C₁-C₄-alkyl.

Encore plus préférentiellement, il est choisi parmi méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate.

Selon l'invention, la réaction de polymérisation peut également mettre en œuvre au moins un monomère (M3) choisi parmi acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate, hydroxyéthyl-acrylate phosphaté, hydroxypropyl-acrylate phosphaté, hydroxyéthyl-méthacrylate phosphaté, hydroxypropyl-méthacrylate phosphaté et leurs combinaisons et leurs mélanges.

Le monomère (M3) préféré est choisi parmi acide 2-acrylamido-2-méthylpropane sulfonique et un sel d'acide 2-acrylamido-2-méthylpropane sulfonique.

Selon l'invention, la réaction de polymérisation peut également mettre en œuvre au moins un monomère (M4) de formule (II) : 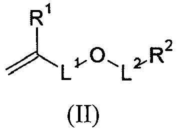 dans laquelle :
- R¹ et R², identiques ou différents, représentent indépendamment H ou CH₃,
- L¹ représente indépendamment un groupement choisi parmi C(O), CH₂, CH₂-CH₂ et O-CH₂-CH₂-CH₂-CH₂,
- L² représente indépendamment un groupement choisi parmi (CH₂-CH₂O)ₓ, (CH₂CH(CH₃)O)_{y}, (CH(CH₃)CH₂O)_{z} et leurs combinaisons et
- x, y et z, identiques ou différents, représentent indépendamment un nombre entier ou décimal compris entre 0 et 150 et la somme x+y+z est comprise entre 10 et 150.

Selon l'invention, la réaction de polymérisation peut également mettre en œuvre au moins un composé (M5) de formule (III) : 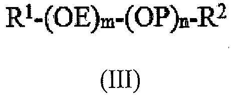 dans laquelle :
- m et n, identiques ou différents, représentent indépendamment 0 ou un nombre entier ou décimal inférieur à 150, m ou n est différent de 0,
- OE représente un groupement CH₂CH₂O,
- OP représente indépendamment un groupement choisi parmi CH(CH₃)CH₂O et CH₂CH(CH₃)O,
- R¹ représente un groupement comprenant au moins une insaturation oléfinique polymérisable, de préférence un groupement choisi parmi acrylate, méthacrylate, acryluréthane, méthacryluréthane, vinyl, allyl, méthallyl et isoprényl, plus préférentiellement un groupement méthacrylate,
- R² représente un groupement hydrocarboné linéaire, ramifié ou cyclique, saturé, insaturé ou aromatique comprenant de 6 à 40 atomes de carbone, de préférence un groupement C₆-C₄₀-alkyl, linéaire ou ramifié, de préférence un groupement C₈-C₃₀-alkyl, linéaire ou ramifié, un groupement C₆-C₄₀-aryl, de préférence un groupement C₈-C₃₀-aryl, par exemple un groupement tristyrylphényl.

Selon l'invention, la réaction de polymérisation peut également mettre en œuvre au moins un monomère (M6) choisi parmi :
- acrylate de polyalkylèneglycol, de préférence acrylate de polyéthylèneglycol ou acrylate de polyéthylènepolypropylèneglycol,
- méthacrylate de polyalkylèneglycol, de préférence méthacrylate de polyéthylèneglycol ou méthacrylate de polyéthylènepolypropylèneglycol,
- allylpolyalkylèneglycol, de préférence allylpolyéthylèneglycol ou allylpolyéthylènepolypropylèneglycol,
- méthallylpolyalkylèneglycol, de préférence méthallylpolyéthylèneglycol ou méthallylpolyéthylènepolypropylèneglycol,
- 3-méthyl-3-buten-1-ylpolyalkylèneglycol, de préférence 3-méthyl-3-buten-1-ylpolyéthylèneglycol ou 3-méthyl-3-buten-1-ylpolyéthylènepolypropylèneglycol,
- phosphate d'acrylate de polyalkylèneglycol, de préférence phosphate d'acrylate de polyéthylèneglycol ou phosphate d'acrylate de polyéthylènepolypropylèneglycol,
- phosphate de méthacrylate de polyalkylèneglycol, de préférence phosphate de méthacrylate de polyéthylèneglycol ou phosphate de méthacrylate de polyéthylènepolypropylèneglycol,
- phosphate d'allylpolyalkylèneglycol, de préférence phosphate d'allylpolyéthylèneglycol ou phosphate d'allylpolyéthylènepolypropylèneglycol,
- phosphate de méthallylpolyalkylèneglycol, de préférence phosphate de méthallylpolyéthylèneglycol ou phosphate d'éthallylpolyéthylènepolypropylèneglycol,
- phosphate de 3-méthyl-3-buten-1-ylpolyalkylèneglycol, de préférence phosphate de 3-méthyl-3-buten-1-ylpolyéthylèneglycol ou phosphate de 3-méthyl-3-buten-1-ylpolyéthylènepolypropylèneglycol.

Selon l'invention, la réaction de polymérisation peut également mettre en œuvre au moins un monomère (M7) choisi parmi un composé réticulant et un monomère comprenant au moins deux insaturations oléfiniques.

Selon l'invention, outre un ou plusieurs monomères (M1), la réaction de polymérisation peut également mettre en œuvre un ou plusieurs monomères (M2) à (M7) ainsi que leurs différentes combinaisons. Des polymères particulièrement préférés selon l'invention sont choisis parmi :
- les homopolymères préparés par réaction de polymérisation mettant en œuvre un seul monomère (M1), de préférence acide acrylique ou un sel d'acide acrylique ou encore acide itaconique ou un sel d'acide itaconique,
- les copolymères préparés par réaction de polymérisation mettant en œuvre deux monomères (M1), de préférence acide acrylique et acide méthacrylique ; un sel d'acide acrylique et acide méthacrylique ; acide acrylique et acide maléique ; un sel d'acide acrylique et acide maléique ; acide acrylique et anhydride maléique ; un sel d'acide acrylique et anhydride maléique,
- les copolymères préparés par réaction de polymérisation mettant en œuvre trois monomères (M1), de préférence acide acrylique, acide méthacrylique et acide itaconique ; un sel d'acide acrylique, acide méthacrylique et acide itaconique,
- les copolymères préparés par réaction de polymérisation mettant en œuvre un monomère (M1) et un monomère (M2) ; de préférence acide acrylique et acrylate d'éthyle ; un sel d'acide acrylique et acrylate d'éthyle ; acide acrylique et acrylate de butyle ; un sel d'acide acrylique et acrylate de butyle ; acide acrylique et acrylate d'hydroxypropyle ; un sel d'acide acrylique et acrylate d'hydroxypropyle ; acide acrylique et méthacrylate d'hydroxypropyle ; un sel d'acide acrylique et méthacrylate d'hydroxypropyle,
- les copolymères préparés par réaction de polymérisation mettant en œuvre un monomère (M1) et deux monomères (M2), de préférence acide acrylique, acrylate de butyle et styrène ; un sel d'acide acrylique, acrylate de butyle et styrène,
- les copolymères préparés par réaction de polymérisation mettant en œuvre deux monomères (M1) et deux monomères (M2), de préférence acide acrylique, acide méthacrylique, acrylate de butyle et styrène ; un sel d'acide acrylique, acide méthacrylique, acrylate de butyle et styrène,
- les copolymères préparés par réaction de polymérisation mettant en œuvre un monomère (M1) et un monomère (M3), de préférence acide acrylique et acide 2-acrylamido-2-méthylpropane sulfonique ; un sel d'acide acrylique et acide 2-acrylamido-2-méthylpropane sulfonique ; acide acrylique et un sel d'acide 2-acrylamido-2-méthylpropane sulfonique ; un sel d'acide acrylique et un sel d'acide 2-acrylamido-2-méthylpropane sulfonique,
- les copolymères préparés par réaction de polymérisation mettant en œuvre un monomère (M1) et un monomère (M4), de préférence acide acrylique et méthacrylate de polyéthylènepolypropylèneglycol ; un sel d'acide acrylique et méthacrylate de polyéthylènepolypropylèneglycol et
- les copolymères préparés par réaction de polymérisation mettant en œuvre un monomère (M1) et un monomère (M6), de préférence acide acrylique et phosphate de méthacrylate de polyéthylèneglycol ; un sel d'acide acrylique et phosphate de méthacrylate de polyéthylèneglycol.

Outre un polymère (P), l'agent dispersant selon l'invention comprend au moins un dérivé (S) choisi parmi un ose (S1), un oligomère d'ose (S2), un produit (S3) et leurs combinaisons.

Selon l'invention, le dérivé (S1) est un ose qui comprend une fonction hémiacétalique libre ou bien condensée entre l'hydroxyle de la fonction hémiacétalique porté par le carbone anomérique avec un groupement OH d'une autre molécule. De manière préférée selon l'invention, l'ose (S1) est choisi parmi trioses (oses comprenant 3 atomes de carbone), tétroses (oses comprenant 4 atomes de carbone), pentoses (oses comprenant 5 atomes de carbone), hexoses et désoxyhexoses (oses comprenant 6 atomes de carbone), heptoses (oses comprenant 7 atomes de carbone), octoses (oses comprenant 8 atomes de carbone). Plus préférentiellement, il est choisi parmi glycéraldéhyde, dihydroxyacétone, érythrose, thréose, érythrulose, désoxyribose, ribose, arabinose, xylose, lyxose, ribulose, xylulose, allose, altrose, galactose, glucose, gulose, idose, mannose, talose, fructose, psicose, sorbose, tagatose, fucose, rhamnose, sédoheptulose, mannoheptulose, heptahydroxyoctanal. Le glucose utilisé seul ou en mélange est préféré.

Selon l'invention, le dérivé (S2) est un oligomère formé d'un nombre déterminé d'oses. De manière préférée selon l'invention, l'oligomère (S2) est choisi parmi les dimères d'ose, les trimères d'ose. Plus préférentiellement, il est choisi parmi dextrose, maltose, lactose, saccharose, maltoriose, maltotetraose, acide alpha-glucoheptonique, acide beta-glucoheptonique. Le saccharose utilisé seul ou en mélange est préféré.

Selon l'invention, le dérivé (S3) est un produit issu de la dégradation d'un saccharide généralement obtenu à partir d'un cétose qui est dégradé dans des conditions déterminées, conduisant à une rupture de chaîne au niveau de la fonction cétone. On obtient généralement un ou plusieurs acides carboxyliques. De manière préférée selon l'invention, le produit (S3) est choisi parmi aldoses, dérivés synthétiques de monosaccharide, dérivés synthétiques de disaccharide. Plus préférentiellement, il est choisi parmi sorbitol, mannitol, acide gluconique, acide citrique, acide isocitrique, acide lactique, acide tartrique, les sels de ces acides. Les acides gluconique, citrique et tartrique sont préférés, en particulier l'acide gluconique utilisé seul ou en mélange.

De manière particulièrement préférée selon l'invention, le dérivé (S) est choisi parmi sorbitol, mannitol, acide gluconique, acide citrique, acide isocitrique, acide lactique, acide tartrique, les sels de ces acides, dextrose, maltose, glucose, un mélange de glucose et de maltose, lactose, saccharose, maltoriose, maltotetraose, acide alpha-glucoheptonique, acide beta-glucoheptonique, les sels de ces acides, et les combinaisons de ces dérivés. Ces différents dérivés (S) sont généralement des produits disponibles commercialement, par exemple sous forme cristalline ou sous forme de sirop, tel le sirop de glucose ou le sirop de maïs.

Selon l'invention, les quantités respectives de dérivé (S) et de polymère (P) peuvent varier de manière assez importante. De manière préférée selon l'invention, le rapport (S/P) des quantités en poids secs de dérivé (S) et de polymère (P) va de 0,1 à 10 ou de 0,2 à 5 ou de 0,3 à 5. De manière plus préférée, ce rapport va de 0,5 à 4 ou de 0,6 à 3.

Outre un agent dispersant, l'invention concerne également une composition aqueuse qui comprend au moins un tel agent dispersant et un matériau minéral. Ainsi, l'invention fournit une composition aqueuse comprenant :
(a) au moins un agent dispersant selon l'invention ;
(b) au moins un matériau minéral sous forme de particules.

De nombreux matériaux minéraux peuvent convenir pour la composition selon l'invention, notamment selon la nature ou selon la forme du matériau minéral.

De manière préférée, les particules de matériau minéral ont un diamètre moyen inférieur à 500 µm, inférieur à 200 µm ou à 100 µm ou bien inférieur à 50 µm ou bien encore un diamètre moyen allant de 0,05 µm à 50 µm ou bien un diamètre moyen inférieur à 10 µm, de préférence inférieur à 5 µm ou à 2 µm, également préférentiellement inférieur à 1 µm ou inférieur à 0,5 µm.

Selon l'invention, un seul matériau minéral (a) ou deux ou trois matériaux minéraux (a) sont mis en œuvre. De manière préférée, un seul matériau minéral ou bien deux matériaux minéraux sont mis en œuvre.

De manière avantageuse selon l'invention, le matériau minéral (a) est synthétique ou d'origine naturelle. De préférence, il est choisi parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, kaolin calciné, dioxyde de titane, oxyde de fer, talc, sulfate de calcium, sulfate de baryum, silices, mica, oxyde de zinc.

Plus préférentiellement, il est choisi parmi carbonate de calcium (carbonate de calcium naturel ou carbonate de calcium précipité), oxyde de titane, kaolin et kaolin calciné. Outre un agent dispersant selon l'invention et un matériau minéral, la composition selon l'invention peut comprendre d'autres éléments, notamment selon le domaine technique d'utilisation de cette composition.

Ainsi, la composition aqueuse selon l'invention peut également comprendre au moins un agent liant (c) d'origine naturelle ou synthétique. Selon l'invention, l'agent liant (c) peut être un agent liant naturel comme l'amidon, la carboxyméthyl cellulose (CMC), des hydroxyethyl celluloses, l'alcool polyvinylique (PV-OH), la caséine, des protéines, des alginates. Selon l'invention, l'agent liant (c) peut également être un agent liant synthétique comme un latex, de préférence choisi parmi un polymère styrène-butadiène, un polymère styrène-acrylique, un polymère styrène-acétate, plus préférentiellement un polymère styrène-butadiène.

La composition aqueuse selon l'invention peut également comprendre au moins un agent épaississant (d) d'origine naturelle ou synthétique. De préférence, il est choisi parmi une émulsion polymérique, un polymère HASE, un polymère ASE, un polymère HEUR, un polymère polyuréthane, un polymère épaississant stérique, un polymère polyacrylamide, CMC, un dérivé de CMC et leurs combinaisons.

Les proportions des différents éléments de la composition aqueuse selon l'invention peuvent varier de manière importante, notamment selon le domaine technique d'utilisation de cette composition.

De préférence, la composition aqueuse selon l'invention comprend :
- de 0,02 à 2 % sec en masse d'agent dispersant (a),
- de 30 à 75 % sec en masse de matériau minéral (b),
- de 2 à 25 % sec en masse d'agent liant (c),
- de 0,01 à 2 % sec en masse d'agent épaississant (d) et
- de 22,97 à 42,98 % en masse d'eau.

Lors son utilisation, la composition aqueuse selon l'invention peut être utilisée après dilution, en particulier après dilution avec de l'eau.

De manière plus préférée, la composition aqueuse selon l'invention est une composition pour sauce de couchage papetière.

La composition aqueuse selon l'invention peut également comprendre au moins un adjuvant, en particulier au moins un adjuvant choisi parmi agents dispersants, agents anti-mousse, agents biocides, agents colorants, agents lubrifiants et agents azurants optiques.

L'agent dispersant selon l'invention convient pour de nombreuses utilisations. De manière préférée, l'agent dispersant selon l'invention est utilisé pour la préparation d'une composition aqueuse, de préférence pour la préparation d'une composition aqueuse selon l'invention.

Ainsi l'invention concerne également une utilisation d'un agent dispersant selon l'invention qui comprend l'addition de l'agent dispersant dans une suspension aqueuse d'au moins un matériau minéral sous forme de particules. Cette utilisation selon l'invention peut également comprendre l'addition d'au moins un matériau minéral sous forme de particules dans une composition aqueuse comprenant au moins un agent dispersant selon l'invention.

L'invention concerne également l'utilisation d'au moins un agent dispersant selon l'invention pour la préparation d'une composition aqueuse choisie parmi une composition pour sauce de couchage papetière, de préférence destinée à la préparation d'une couche de revêtement primaire de papier (pré-couche) ou d'une couche de revêtement final de papier (top-couche) ; une composition de revêtement, de préférence de peinture ou de vernis ; une composition d'encre, de préférence une composition d'encre pour imprimante à jet d'encre ; une composition de soin, de préférence une composition de soin du corps ou des cheveux ; une composition d'amendement de sol. De manière préférée, cette utilisation concerne la préparation d'une composition pour sauce de couchage papetière ou d'une composition de revêtement.

Par ailleurs, l'invention fournit également une méthode de contrôle de la rhéologie d'une composition aqueuse comprenant au moins un polymère (P) défini selon l'invention par addition dans la composition d'au moins un dérivé (S) choisi parmi :
- un ose (S1) comprenant de 3 à 8 atomes de carbone ;
- un oligomère d'ose (S2) comprenant de 1 à 10 motifs en ose ;
- un produit (S3) issu de la dégradation d'un saccharide.

De manière préférée pour cette méthode selon l'invention, le rapport (S/P) des quantités en poids secs de dérivé (S) et de polymère (P) va de 0,1 à 10 ou de 0,2 à 5 ou de 0,3 à 5. Plus préférentiellement, il va de 0,5 à 4 ou de 0,6 à 3.

De manière plus préférée selon l'invention pour cette méthode selon l'invention, la composition comprend au moins un ingrédient choisi parmi :
- un matériau minéral sous forme de particules, de préférence un matériau défini selon l'invention ;
- un agent liant, de préférence un agent liant (c) défini selon l'invention ;
- un agent épaississant, de préférence un agent épaississant (d) défini selon l'invention.

Les exemples qui suivent donnent une illustration des différents aspects de l'invention.

### EXEMPLES

### Préparation des polymères mis en œuvre selon l'invention et de polymères comparatifs

### Polymère (P1)

Dans un réacteur de 1 L muni d'une agitation mécanique, d'un chauffage de type bain d'huile et de pompes péristaltiques, on pèse : 209,7 g d'eau, 0,08 g de sulfate de fer heptahydraté et 0,011 g de sulfate de cuivre penta hydraté. L'ensemble est alors chauffé à 95°C et on ajoute en 120 min, à l'aide des pompes péristaltiques : 302,5 g d'acide acrylique et 13 g d'eau, 25,6 g d'hypophosphite de sodium monohydrate dissous dans 29 g d'eau, 20,46 g d'eau oxygénée 130V diluée avec 25 g d'eau. Puis, on cuit durant 60 min à 95°C. L'ensemble est ensuite refroidi, neutralisé avec de la soude à 50 % dans l'eau jusqu'à pH 8,5 et dilué afin d'obtenir une teneur en matière sèche de 40 %. On obtient alors le polymère (P1) polyacrylate de sodium de Mw 4 400 g/mol.

### Polymère (P2)

Dans un réacteur de 1 L muni d'une agitation mécanique, d'un chauffage de type bain d'huile et de pompes péristaltiques, on pèse : 158 g d'eau, 0,014 g de sulfate de fer heptahydraté. L'ensemble est alors chauffé à 80°C et on ajoute, à l'aide des pompes péristaltiques, simultanément les réactifs suivants tout en maintenant la température à 81+/-1°C : 271 g d'acide acrylique en 210 min, 3,3 g de persulfate de sodium dissous dans 44 g d'eau en 210 min et 114,46 g d'une solution de bisulfite de sodium diluée à 40 % en poids dans l'eau en 180 min. Puis, on cuit durant 60 min à 80°C. On traite avec 4,5 g de peroxyde d'hydrogène à 130 V et on cuit à nouveau durant 60 min à 80°C.

L'ensemble est ensuite refroidi, neutralisé avec de la soude à 50 % dans l'eau jusqu'à pH 8,5 et dilué afin d'obtenir une teneur en matière sèche de 40 %. On obtient alors le polymère (P2) polyacrylate de sodium, de Mw 2 800 g/mol.

### Polymère (P3)

À partir d'acide itaconique partiellement neutralisé au moyen de soude ajoutée lentement, sous agitation et à température contrôlée, puis polymérisé par chauffage dans l'eau et sous agitation en présence d'hypophosphite de sodium et de peroxyde d'hydrogène, et enfin partiellement décarboxylé par chauffage à reflux dans l'eau, on prépare une solution polymérique (P3) de polyitaconate de sodium partiellement décarboxylé ayant une concentration de 40 % en poids de polymère et un pH de 9 (méthode décrite dans les exemples du document WO 2015-100412).

On obtient le polymère (P3) de Mw 2 160 g/mol.

### Polymère (P4)

Dans un réacteur de 1 L muni d'une agitation mécanique, d'un chauffage de type bain d'huile et de pompes péristaltiques, on pèse : 245 g d'eau, 0,13 g de sulfate de fer heptahydraté et 0,02 g de sulfate de cuivre penta hydraté. L'ensemble est alors chauffé à 95°C et on ajoute en 120 min, simultanément à l'aide de 3 pompes indépendantes : un mélange de 284 g d'acide acrylique et de 180 g d'acrylate d'hydroxypropyle, 37 g d'eau oxygénée 130 V diluée avec 34 g d'eau et 96 g d'une solution à 50 % d'hypophosphite de sodium. Puis, on cuit durant 60 min à 95°C.

L'ensemble est ensuite refroidi, neutralisé avec une solution d'ammoniaque 28° jusqu'à pH 7 et dilué afin d'obtenir une teneur en matière sèche de 44 %. On obtient alors le polymère (P4) de Mw 2 800 g/mol.

### Polymère (P5)

Dans un réacteur de 1 L muni d'une agitation mécanique, d'un chauffage de type bain d'huile et de pompes péristaltiques, on pèse: 200 g d'isopropanol et 1,7g d'AZDN. L'ensemble est alors chauffé à reflux à environ 80°C et on ajoute en 120 min, à l'aide des pompes péristaltiques : 200 g d'acide acrylique et 81 g d'acrylate de butyle. Puis, on cuit durant 60 min à reflux. On distille alors l'isopropanol et on remplace progressivement ce dernier par de l'eau au cours de la distillation.

L'ensemble est ensuite refroidi, neutralisé avec une solution de potasse à 50 % dans l'eau jusqu'à pH 8 et dilué afin d'obtenir une teneur en matière sèche de 40 %. On obtient alors le polymère (P5) de Mw 9 000 g/mol.

### Polymère (P6)

Dans un réacteur de 1 L muni d'une agitation mécanique, d'un chauffage de type bain d'huile et de pompes péristaltiques, on pèse 260 g d'eau puis on chauffe à 65°C et on ajoute en 180 min, simultanément à l'aide de 3 pompes indépendantes : un mélange de 50 g d'acide acrylique et de 343 g d'un macromonomère méthacrylate de poly(éthylène glycol-co-propylène glycol) de masse moléculaire 3 000 g/mol (correspondant en moyenne à 46 unités d'oxyde d'éthylène et 15 unités d'oxyde de propylène réparties aléatoirement) et terminé par un groupement hydroxyle, 3,6 g de persulfate d'ammonium dissout avec 80 g d'eau et 4,5 g de 1,8-dimercapto-3,6-dioxaoctane (DMDO). Puis, on cuit durant 60 min en ajoutant progressivement une solution de 1 g de persulfate de sodium dissout dans 10 g d'eau.

L'ensemble est ensuite refroidi, neutralisé avec une solution de soude à 50 % dans l'eau jusqu'à pH 4 et dilué afin d'obtenir une teneur en matière sèche de 40 %. On obtient alors le polymère (P6) de Mw 38 000g/mol.

### Polymère (P7)

Dans un réacteur de 2 L muni d'une agitation mécanique, d'un chauffage de type bain d'huile et de pompes péristaltiques, on pèse : 230 g d'isopropanol, 230 g d'eau, 0,005 g de sulfate de fer heptahydraté et 0,11 g de sulfate d'hydoxylamine. L'ensemble est alors chauffé à reflux à environ 80°C et on ajoute en 120 min, à l'aide de trois pompes péristaltiques : un mélange comprenant 296,8 g d'acide acrylique, 164,2 g d'une solution aqueuse à 50 % en poids de 2-acrylamido-2-méthylpropane-sulfonate de sodium, par ailleurs 12 g d'eau oxygénée 130 V diluée dans 50 g d'eau et 3,3 g de sulfate d'hydroxylamine dissout dans 70 g d'eau. Puis, on cuit durant 60 min à reflux. On distille alors l'isopropanol et on remplace progressivement ce dernier par de l'eau au cours de la distillation.

L'ensemble est ensuite refroidi, neutralisé avec de la soude à 50 % dans l'eau jusqu'à pH 4 et dilué afin d'obtenir une teneur en matière sèche de 50 %. On obtient alors un polymère (P7) de Mw 5 000 g/mol.

### Préparation d'agents dispersants selon l'invention et d'agents dispersants comparatifs

On prépare un agent dispersant (D1) selon l'invention en mélangeant le polymère (P1) avec le dérivé (S1). On pèse le polymère (P1) dans un bécher puis on ajoute, sous agitation au moyen d'un moteur VMI turbine 30 à 1 000 tour/min, le dérivé (S1) et de l'eau. Les quantités mises en œuvre sont présentées dans le tableau 1.

De manière analogue, on prépare d'autres agents dispersants selon l'invention. Les dérivés (S) suivants ont été utilisés :
- S1-1 : sirop de glucose à 80 % en poids d'extrait sec (CSweet M01658, Cargill),
- S1-2 : sirop de glucose à 85 % en poids d'extrait sec (74/968, Roquette) et
- S1-3 : sirop de glucose à 91 % en poids d'extrait sec (4779, Roquette).

**Tableau 1**

| S3-1 : acide gluconique à 48 % en poids d'extrait sec (EMF1240, Jungbunzlauer) Agent dispersant | Polymère (P) | Quantité de (P) | Dérivé (S) | Quantité de (S) | Rapport (S)/(P) | Quantité d'eau |
|---|---|---|---|---|---|---|
| D1 | P1 | 142,9 | S1-1 | 50 | 40/60 | 45 |
| D2 | P1 | 95,2 | S1-1 | 75 | 60/40 | 68 |
| D3 | P1 | 142,9 | S1-2 | 47,1 | 40/60 | 48 |
| D4 | P1 | 95,2 | S1-2 | 70,6 | 60/40 | 72 |
| D5 | P1 | 142,9 | S3-1 | 80 | 40/60 | 15 |
| D6 | P1 | 95,2 | S3-1 | 120 | 60/40 | 23 |
| D7 | P1 | 142,9 | S1-3 | 43,8 | 40/60 | 51 |
| D8 | P1 | 95,2 | S1-3 | 65,6 | 60/40 | 77 |
| D9 | P2 | 142,9 | S1-1 | 50 | 40/60 | 45 |
| D10 | P3 | 150 | S1-1 | 50 | 40/60 | 50 |
| D11 | P4 | 93 | S1-2 | 75 | 60/40 | 65 |
| D12 | P5 | 125 | S1-2 | 58,8 | 50/50 | 66 |
| D13 | P6 | 100 | S1-2 | 70,6 | 60/40 | 79 |
| D14 | P7 | 100 | S1-2 | 58,8 | 50/50 | 41 |

On contrôle l'extrait sec final de chaque agent dispersant au moyen d'une balance CEM à microondes, à 110°C jusqu'à une variation d'extrait sec inférieure à 0,1 % en poids après 10 secondes. L'extrait sec des agents selon l'invention est de 42 % en poids, à l'exception des agents dispersants D12, D13 et D14 qui ont, respectivement, un extrait sec de 40 % en poids, 40 % en poids et 44 % en poids.

### Préparation de compositions aqueuses de matériaux minéraux comprenant des agents dispersants selon l'invention ou des agents dispersants comparatifs

On prépare une composition aqueuse (C1) selon l'invention.

Dans un bêcher, on pèse l'agent dispersant (D2) selon l'invention puis on ajoute de l'eau et ensuite un pigment minéral (PM1) en agitant jusqu'à 2 500 tour/min au moyen d'un agitateur VMI muni d'une turbine de 65 mm.

Finalement, on ajoute de la soude à 12,5 % en poids dans l'eau jusqu'à pH contrôlé et on maintient l'agitation durant 20 min. On mesure alors l'extrait sec de la composition. Les quantités respectives (g) et taux d'agent dispersant (% en poids sec par rapport à la quantité de pigment sec) des différents ingrédients ainsi que les caractéristiques des compositions préparées sont présentées dans les tableaux 2 et 3.

De manière analogue, on prépare des compositions aqueuses (C2) à (C36) selon l'invention ainsi que des compositions comparatives (CC1) à (CC14) ne comprenant pas de dérivé (S) dans l'agent dispersant utilisé mais uniquement un polymère comparatif. Le pH des compositions est ajusté à 8,5, à l'exception du pH des compositions aqueuses (C33), (C34), (C35) et (C36) selon l'invention qui est respectivement de 7, 7, 9 et 9 et des compositions comparatives (CC12), (CC13) et (CC14) qui est respectivement de 9, 7 et 7. Les agents dispersants (D1) à (D14) selon l'invention ont été utilisés. Les pigments minéraux suivants ont été utilisés :
- PM1 : kaolin (Capim DG, Imerys),
- PM2 : kaolin (Amazon plus Lump, Kamin),
- PM3 : carbonate de calcium (Etiquette Violette, Omya),
- PM4 : carbonate de calcium précipité (SOCAL P3, Solvay),
- PM5 : kaolin (Speswhite, Imerys),
- PM6 : dioxyde de titane (RHD2, Elementis),
- PM7 : dioxyde de titane (RCL 722, Cristal) et
- PM8 : kaolin calciné (Hubertex, Kamin).

On mesure la viscosité (mPa.s) des suspensions aqueuses préparées au moyen d'un viscosimètre Brookfield RVI à 100 tour/min et à 25°C. Les résultats sont présentés dans les tableaux 2 et 3.

**Tableau 2**

| Composition | Agent dispersant | Quantité agent dispersant | Taux agent dispersant | Pigment minéral | Quantité pigment minéral | Quantité eau | Viscosité |
|---|---|---|---|---|---|---|---|
| C1 | D2 | 0,95 | 0,1 | PM1 | 487 | 52,7 | 670 |
| C2 | D4 | 0,95 | 0,1 | PM1 | 487 | 52,7 | 630 |
| C3 | D6 | 0,95 | 0,1 | PM1 | 487 | 52,7 | 660 |
| C4 | D8 | 0,95 | 0,1 | PM1 | 487 | 52,7 | 640 |
| CC1 | 0 | 0,95 | 0,1 | PM1 | 487 | 52,7 | 900 |
| C5 | D10 | 1,5 | 0,15 | PM1 | 487 | 52,7 | 850 |
| CC2 | 0 | 1,5 | 0,15 | PM1 | 487 | 52,7 | 930 |
| C6 | D1 | 1,9 | 0,2 | PM1 | 487 | 52,7 | 980 |
| C7 | D2 | 1,9 | 0,2 | PM1 | 487 | 52,7 | 600 |
| C8 | D3 | 1,9 | 0,2 | PM1 | 487 | 52,7 | 760 |
| C9 | D4 | 1,9 | 0,2 | PM1 | 487 | 52,7 | 640 |
| C10 | D5 | 1,9 | 0,2 | PM1 | 487 | 52,7 | 1 000 |
| C11 | D6 | 1,9 | 0,2 | PM1 | 487 | 52,7 | 780 |
| C12 | D7 | 1,9 | 0,2 | PM1 | 487 | 52,7 | 690 |
| C13 | D8 | 1,9 | 0,2 | PM1 | 487 | 52,7 | 780 |
| C14 | D10 | 1,9 | 0,2 | PM1 | 487 | 52,7 | 880 |
| CC3 | 0 | 1,9 | 0,2 | PM1 | 487 | 52,7 | 1 350 |
| C15 | D1 | 2,38 | 0,25 | PM1 | 487 | 52,7 | 1120 |
| C16 | D2 | 2,38 | 0,25 | PM1 | 487 | 52,7 | 620 |
| C17 | D3 | 2,38 | 0,25 | PM1 | 487 | 52,7 | 900 |
| C18 | D4 | 2,38 | 0,25 | PM1 | 487 | 52,7 | 680 |
| C19 | D5 | 2,38 | 0,25 | PM1 | 487 | 52,7 | 1140 |
| C20 | D6 | 2,38 | 0,25 | PM1 | 487 | 52,7 | 860 |
| C21 | D7 | 2,38 | 0,25 | PM1 | 487 | 52,7 | 730 |
| C22 | D8 | 2,38 | 0,25 | PM1 | 487 | 52,7 | 860 |
| CC4 | 0 | 2,38 | 0,25 | PM1 | 487 | 52,7 | 1 700 |

**Tableau 3**

| Composition | Agent dispersant | Quantité agent dispersant | Pigment minéral | Quantité pigment | Taux agent dispersant | Quantité eau | Viscosité |
|---|---|---|---|---|---|---|---|
| C23 | D12 | 2,38 | 410,3 | PM2 | 0,25 | 114,3 | 195 |
| C24 | D9 | 2,38 | 410,3 | PM2 | 0,25 | 114,3 | 195 |
| CC5 | 0 | 2,38 | 410,3 | PM2 | 0,25 | 114,3 | 230 |
| C25 | D3 | 0,95 | PM3 | 407,7 | 0,1 | 112 | 100 |
| CC6 | 0 | 0,95 | PM3 | 407,7 | 0,1 | 112 | 110 |
| C26 | D1 | 1,43 | PM3 | 407,7 | 0,15 | 112 | 100 |
| C27 | D3 | 1,43 | PM3 | 407,7 | 0,15 | 112 | 100 |
| CC7 | 0 | 1,43 | PM3 | 407,7 | 0,15 | 112 | 150 |
| C28 | D3 | 3,33 | PM4 | 400 | 0,35 | 187 | 240 |
| CC8 | 0 | 3,33 | PM4 | 400 | 0,35 | 187 | 260 |
| C29 | D13 | 6 | PM4 | 400 | 0,6 | 182,2 | 720 |
| CC9 | 0 | 6 | PM4 | 400 | 0,6 | 182,2 | 830 |
| C30 | D14 | 6,36 | PM4 | 400 | 0,7 | 186 | 304 |
| CC10 | 0 | 6,36 | PM4 | 400 | 0,7 | 186 | 380 |
| C31 | D1 | 1,9 | PM5 | 487 | 0,2 | 52,7 | 460 |
| C32 | D6 | 1,9 | PM5 | 487 | 0,2 | 52,7 | 480 |
| CC11 | 0 | 1,9 | PM5 | 487 | 0,2 | 52,7 | 530 |
| C33 | D12 | 5 | PM6 | 400 | 0,5 | 131 | 80 |
| CC12 | 0 | 5 | PM6 | 400 | 0,5 | 131 | 214 |
| C34 | D11 | 2 | PM7 | 405,7 | 0,5 | 125,75 | 140 |
| CC13 | 0 | 2 | PM7 | 405,7 | 0,5 | 125,75 | 180 |

On constate que les compositions selon l'invention possèdent une viscosité plus faible que les compositions comparatives alors qu'elles contiennent une quantité plus faible de polymère.

Par ailleurs, on évalue un effet de dilatance par mesure d'un taux de cisaillement (s⁻¹) à 25°C des suspensions aqueuses préparées, en utilisant un rhéomètre coaxial Thermofisher RS600 dont le mobile a une géométrie CC27 DG Ti en augmentant la vitesse (s⁻¹) du mobile jusqu'à blocage de ce mobile. Les résultats sont présentés dans le tableau 4.

**Tableau 4**

| Composition | Agent dispersant | Quantité agent dispersant | Pigment minéral | Quantité pigment minéral | Taux agent dispersant | Quantité eau | Taux de cisaillement |
|---|---|---|---|---|---|---|---|
| C35 | D3 | 2 | PM8 | 413,2 | 0,5 | 385,8 | 870 |
| C36 | D4 | 2 | PM8 | 413,2 | 0,5 | 385,8 | 1 180 |
| CC14 | 0 | 2 | PM8 | 413,2 | 0,5 | 385,8 | 800 |

On constate que l'effet de dilatance des compositions selon l'invention est plus faible que celui de la composition comparative. En effet, les compositions selon l'invention permettent d'atteindre un taux de cisaillement plus élevé au moment du blocage du mobile.

## Revendications

1. Agent dispersant aqueux comprenant :
- au moins un polymère (P) préparé par au moins une réaction de polymérisation radicalaire, à une température supérieure à 50°C, d'au moins un monomère anionique (M1) comprenant au moins une insaturation oléfinique polymérisable et au moins une fonction acide carboxylique ou d'un de ses sels, en présence d'au moins un composé générateur de radicaux choisi parmi peroxyde d'hydrogène, benzoyl peroxyde, acétyl peroxyde, lauryl peroxyde, hydroperoxyde de tertiobutyle, cumène hydroperoxyde, persulfate d'ammonium, un persulfate de métal alcalin, un composé azoïque, leurs combinaisons et leurs associations respectives avec un ion choisi parmi Fe^{II}, Fe^{III}, Cu^{I}, Cu^{II} et leurs combinaisons ;
- au moins un dérivé (S) choisi parmi :
o un ose (S1) comprenant de 3 à 8 atomes de carbone ;
o un oligomère d'ose (S2) comprenant de 1 à 10 motifs en ose ;
o un produit (S3) issu de la dégradation d'un saccharide.

2. Agent selon la revendication 1 pour lequel :
- la réaction de polymérisation est mise en œuvre également en présence d'au moins un composé comprenant du phosphore au degré d'oxydation I, de préférence un composé choisi parmi l'acide hypophosphoreux (H₃PO₂) et un dérivé de l'acide hypophosphoreux (H₃PO₂), de préférence un composé comprenant au moins un ion hypophosphite (H₂PO₂⁻), plus préférentiellement un composé choisi parmi hypophosphite de sodium (H₂PO₂Na), hypophosphite de potassium (H₂PO₂K), hypophosphite de calcium ([H₂PO₂]₂Ca) et leurs combinaisons ; ou
- la réaction de polymérisation est mise en œuvre également en présence d'au moins un composé comprenant un ion bisulfite, de préférence un composé choisi parmi bisulfite d'ammonium, un bisulfite de métal alcalin, notamment bisulfite de sodium, bisulfite de potassium, bisulfite de calcium, bisulfite de magnésium et leurs combinaisons ; ou
- la réaction de polymérisation est mise en œuvre en présence d'au moins un composé comprenant du phosphore au degré d'oxydation III, de préférence un composé choisi parmi l'acide phosphoreux et un dérivé de l'acide phosphoreux, plus préférentiellement un composé comprenant au moins un ion phosphite, notamment un composé choisi parmi phosphite de sodium, phosphite de calcium, phosphite de potassium, phosphite d'ammonium et leurs combinaisons ; ou
- la réaction de polymérisation est mise en œuvre également en présence de 0,05 à 5 % en poids, par rapport à la quantité totale de monomères, d'au moins un composé choisi parmi un dérivé xanthate, un composé mercaptan et un composé de formule (I) : 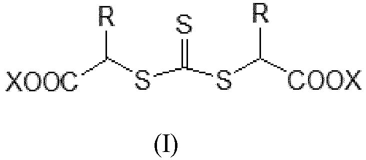 dans laquelle :
- X représente indépendamment H, Na ou K,
- R représente indépendamment un groupement C₁-C₅-alkyle, de préférence un groupement méthyl ; en particulier un composé de formule (I) qui est le diisopropionate de trithiocarbonate disodique (DPTTC - numéro CAS 6332-91-8) ; ou
- la réaction de polymérisation est mise en œuvre également en présence d'au moins un composé réducteur, par exemple d'un composé choisi parmi sulfate d'hydroxylamine, hydrate d'hydrazine et leurs combinaisons ; ou
- la réaction de polymérisation est mise en œuvre à pression atmosphérique et à une température allant de 50 à 98°C ou de 75 à 99°C, de préférence de 50 à 95°C ou de 50 à 85°C ; à une pression supérieure à la pression atmosphérique et à une température supérieure à 100°C, de préférence inférieure à 140°C ; ou
- la réaction de polymérisation est réalisée dans l'eau, dans un solvant, seul ou en mélange avec de l'eau, notamment un solvant alcoolique, en particulier alcool isopropylique, de préférence dans l'eau ; ou
- le polymère (P) est, totalement ou partiellement, neutralisé, notamment à l'issue de la réaction de polymérisation ; de préférence au moyen d'au moins un dérivé choisi parmi un métal alcalin, un métal alcalino-terreux, un dérivé aminé, l'ammoniac, l'ammoniaque et leurs combinaisons, en particulier un dérivé comprenant au moins un élément choisi parmi lithium, sodium, calcium, magnésium et leurs combinaisons, par exemple NaOH, KOH, Ca(OH)₂, Mg(OH)₂, un dérivé aminé choisi parmi monoisopropylamine (AMP), triéthylamine, diéthylamine, monoéthylamine et leurs combinaisons ; ou
- la réaction de polymérisation met en œuvre, par rapport à la quantité totale en poids de monomères :
∘ 100 % en poids de monomère anionique (M1) ou
∘ de 50 % à 99,5 % ou de 70 % à 99,5 % en poids de monomère anionique (M1) et, respectivement, de 0,5 % à 50 % ou de 0,5 % à 30 % en poids d'au moins un autre monomère.

3. Agent dispersant selon l'une des revendications 1 et 2 pour lequel le monomère anionique (M1) comprenant au moins une insaturation oléfinique polymérisable comprend une ou deux fonctions acides carboxyliques, de préférence comprend une seule fonction acide carboxylique, de préférence est choisi parmi acide acrylique, acide méthacrylique, acide itaconique, un sel d'acide acrylique, un sel d'acide méthacrylique, un sel d'acide itaconique et leurs combinaisons, plus préférentiellement l'acide acrylique.

4. Agent dispersant selon l'une des revendications 1 à 3 pour lequel la réaction de polymérisation met également en œuvre au moins un autre monomère choisi parmi :
- un autre monomère anionique (M1), de préférence un monomère choisi parmi acide acrylique, acide méthacrylique, acide itaconique, acide maléique, anhydride maléique et leurs combinaisons ;
- au moins un monomère (M2) non ionique comprenant au moins une insaturation oléfinique polymérisable, de préférence au moins une insaturation éthylénique polymérisable et notamment une fonction vinylique polymérisable, plus préférentiellement un monomère non ionique (M2) choisi parmi styrène, vinylcaprolactam, les esters d'un acide comprenant au moins une fonction acide monocarboxylique, en particulier un ester d'un acide choisi parmi acide acrylique, acide méthacrylique, et leurs combinaisons, par exemple hydroxyéthylacrylate, hydroxypropylacrylate, hydroxyéthylméthacrylate, hydroxypropylméthacrylate, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate ;
- au moins un monomère (M3) choisi parmi acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate, hydroxyéthyl-acrylate phosphaté, hydroxypropyl-acrylate phosphaté, hydroxyéthyl-méthacrylate phosphaté, hydroxypropyl-méthacrylate phosphaté et leurs combinaisons et leurs mélanges ;
- au moins un monomère (M4) de formule (II) : 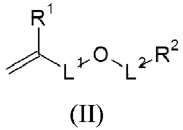 dans laquelle :
- R¹ et R², identiques ou différents, représentent indépendamment H ou CH₃,
- L¹ représente indépendamment un groupement choisi parmi C(O), CH₂, CH₂-CH₂ et O-CH₂-CH₂-CH₂-CH₂,
- L² représente indépendamment un groupement choisi parmi (CH₂-CH₂O)ₓ, (CH₂CH(CH₃)O)_{y}, (CH(CH₃)CH₂O)_{z} et leurs combinaisons et
- x, y et z, identiques ou différents, représentent indépendamment un nombre entier ou décimal compris entre 0 et 150 et la somme x+y+z est comprise entre 10 et 150 ;
- au moins un composé (M5) de formule (III) :
R¹-(OE)ₘ-(OP)ₙ-R² (III)
dans laquelle :
- m et n, identiques ou différents, représentent indépendamment 0 ou un nombre entier ou décimal inférieur à 150, m ou n est différent de 0,
- OE représente un groupement CH₂CH₂O,
- OP représente indépendamment un groupement choisi parmi CH(CH₃)CH₂O et CH₂CH(CH₃)O,
- R¹ représente un groupement comprenant au moins une insaturation oléfinique polymérisable, de préférence un groupement choisi parmi acrylate, méthacrylate, acryluréthane, méthacryluréthane, vinyl, allyl, méthallyl et isoprényl, plus préférentiellement un groupement méthacrylate,
- R² représente un groupement hydrocarboné linéaire, ramifié ou cyclique, saturé, insaturé ou aromatique comprenant de 6 à 40 atomes de carbone, de préférence un groupement C₆-C₄₀-alkyl, linéaire ou ramifié, de préférence un groupement C₈-C₃₀-alkyl, linéaire ou ramifié, un groupement C₆-C₄₀-aryl, de préférence un groupement C₈-C₃₀-aryl, par exemple un groupement tristyrylphényl ;
- au moins un monomère (M6) choisi parmi :
- acrylate de polyalkylèneglycol, de préférence acrylate de polyéthylèneglycol ou acrylate de polyéthylènepolypropylèneglycol,
- méthacrylate de polyalkylèneglycol, de préférence méthacrylate de polyéthylèneglycol ou méthacrylate de polyéthylènepolypropylèneglycol,
- allylpolyalkylèneglycol, de préférence allylpolyéthylèneglycol ou allylpolyéthylènepolypropylèneglycol,
- méthallylpolyalkylèneglycol, de préférence méthallylpolyéthylèneglycol ou méthallylpolyéthylènepolypropylèneglycol,
- 3-méthyl-3-buten-1-ylpolyalkylèneglycol, de préférence 3-méthyl-3-buten-1-ylpolyéthylèneglycol ou 3-méthyl-3-buten-1-ylpolyéthylènepolypropylèneglycol,
- phosphate d'acrylate de polyalkylèneglycol, de préférence phosphate d'acrylate de polyéthylèneglycol ou phosphate d'acrylate de polyéthylènepolypropylèneglycol,
- phosphate de méthacrylate de polyalkylèneglycol, de préférence phosphate de méthacrylate de polyéthylèneglycol ou phosphate de méthacrylate de polyéthylènepolypropylèneglycol,
- phosphate d'allylpolyalkylèneglycol, de préférence phosphate d'allylpolyéthylèneglycol ou phosphate d'allylpolyéthylènepolypropylèneglycol,
- phosphate de méthallylpolyalkylèneglycol, de préférence phosphate de méthallylpolyéthylèneglycol ou phosphate d'éthallylpolyéthylènepolypropylèneglycol,
- phosphate de 3-méthyl-3-buten-1-ylpolyalkylèneglycol, de préférence phosphate de 3-méthyl-3-buten-1-ylpolyéthylèneglycol ou phosphate de 3-méthyl-3-buten- 1-ylpolyéthylènepolypropylèneglycol ;
- au moins un monomère (M7) choisi parmi un composé réticulant et un monomère comprenant au moins deux insaturations oléfiniques.

5. Agent selon l'une des revendications 1 à 4 pour lequel le dérivé (S) est choisi parmi :
- un ose (S1) choisi parmi trioses (oses comprenant 3 atomes de carbone), tétroses (oses comprenant 4 atomes de carbone), pentoses (oses comprenant 5 atomes de carbone), hexoses et désoxyhexoses (oses comprenant 6 atomes de carbone), heptoses (oses comprenant 7 atomes de carbone), octoses (oses comprenant 8 atomes de carbone) ; de préférence choisi parmi glycéraldéhyde, dihydroxyacétone, érythrose, thréose, érythrulose, désoxyribose, ribose, arabinose, xylose, lyxose, ribulose, xylulose, allose, altrose, galactose, glucose, gulose, idose, mannose, talose, fructose, psicose, sorbose, tagatose, fucose, rhamnose, sédoheptulose, mannoheptulose, heptahydroxyoctanal ;
- un oligomère (S2) choisi parmi les dimères d'ose, les trimères d'ose ; de préférence choisi parmi dextrose, maltose, lactose, saccharose, maltoriose, maltotetraose, acide alpha-glucoheptonique, acide beta-glucoheptonique ;
- un produit (S3) choisi parmi aldoses, dérivés synthétiques de monosaccharide, dérivés synthétiques de disaccharide ; de préférence choisi parmi sorbitol, mannitol, acide gluconique, acide citrique, acide isocitrique, acide lactique, acide tartrique, les sels de ces acides.

6. Agent selon l'une des revendications 1 à 5 pour lequel le dérivé (S) est choisi parmi sorbitol, mannitol, acide gluconique, acide citrique, acide isocitrique, acide lactique, acide tartrique, les sels de ces acides, dextrose, maltose, glucose, un mélange de glucose et de maltose, lactose, saccharose, maltoriose, maltotetraose, acide alpha-glucoheptonique, acide beta-glucoheptonique, les sels de ces acides, et les combinaisons de ces dérivés.

7. Agent selon l'une des revendications 1 à 6 pour lequel le rapport (S/P) des quantités en poids secs de dérivé (S) et de polymère (P) va de 0,1 à 10 ou de 0,2 à 5 ou de 0,3 à 5, de préférence de 0,5 à 4 ou de 0,6 à 3.

8. Composition aqueuse comprenant :
(a) au moins un agent dispersant défini selon l'une des revendications 1 à 7 ;
(b) au moins un matériau minéral sous forme de particules.

9. Composition selon la revendication 8 pour laquelle :
- les particules de matériau minéral ont un diamètre moyen inférieur à 500 µm, inférieur à 200 µm ou à 100 µm ou bien inférieur à 50 µm ou bien encore un diamètre moyen allant de 0,05 µm à 50 µm ou bien un diamètre moyen inférieur à 10 µm, de préférence inférieur à 5 µm ou à 2 µm, également préférentiellement inférieur à 1 µm ou inférieur à 0,5 µm ; ou
- un seul matériau minéral (a) ou deux ou trois matériaux minéraux (a) sont mis en œuvre ; ou
- le matériau minéral (a) est synthétique ou d'origine naturelle, de préférence choisi parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, kaolin calciné, dioxyde de titane, oxyde de fer, talc, sulfate de calcium, sulfate de baryum, silices, mica, oxyde de zinc ; plus préférentiellement carbonate de calcium (carbonate de calcium naturel ou carbonate de calcium précipité), dioxyde de titane, kaolin et kaolin calciné.

10. Composition aqueuse selon l'une des revendications 8 et 9 comprenant également :
- au moins un agent liant (c) d'origine naturelle ou synthétique, de préférence un agent liant naturel comme l'amidon, la carboxyméthyl cellulose (CMC), des hydroxyethyl celluloses, l'alcool polyvinylique (PV-OH), la caséine, des protéines, des alginates, ou un agent liant synthétique comme un latex, de préférence choisi parmi un polymère styrène-butadiène, un polymère styrène-acrylique, un polymère styrène-acétate, plus préférentiellement un polymère styrène-butadiène ; ou
- au moins un agent épaississant (d) d'origine naturelle ou synthétique, de préférence choisi parmi une émulsion polymérique, un polymère HASE, un polymère ASE, un polymère HEUR, un polymère polyuréthane, un polymère épaississant stérique, un polymère polyacrylamide, CMC, un dérivé de CMC et leurs combinaisons.

11. Composition aqueuse, de préférence composition aqueuse pour sauce de couchage papetière, selon l'une des revendications 8 à 10 comprenant :
- de 0,02 à 2 % sec en masse d'agent dispersant (a),
- de 30 à 75 % sec en masse de matériau minéral (b),
- de 2 à 25 % sec en masse d'agent liant (c),
- de 0,01 à 2 % sec en masse d'agent épaississant (d) et
- de 22,97 à 42,98 % en masse d'eau.

12. Composition aqueuse selon l'une des revendications 8 à 11 comprenant également au moins un adjuvant, en particulier au moins un adjuvant choisi parmi agents dispersants, agents anti-mousse, agents biocides, agents colorants, agents lubrifiants et agents azurants optiques.

13. Utilisation d'au moins un agent dispersant défini selon l'une des revendications 1 à 7 :
- pour la préparation d'une composition aqueuse, de préférence pour la préparation d'une composition aqueuse définie selon l'une des revendications 8 à 12, comprenant :
- l'addition de l'agent dispersant dans une suspension aqueuse d'au moins un matériau minéral sous forme de particules ou bien
- l'addition d'au moins un matériau minéral sous forme de particules dans une composition aqueuse comprenant au moins un agent dispersant, ou
- pour la préparation d'une composition aqueuse choisie parmi une composition pour sauce de couchage papetière, de préférence destinée à la préparation d'une couche de revêtement primaire de papier (pré-couche) ou d'une couche de revêtement final de papier (top-couche) ; une composition de revêtement, de préférence de peinture ou de vernis ; une composition d'encre, de préférence une composition d'encre pour imprimante à jet d'encre ; une composition de soin, de préférence une composition de soin du corps ou des cheveux ; une composition d'amendement de sol.

14. Méthode de contrôle de la rhéologie d'une composition aqueuse comprenant au moins un polymère (P) défini selon l'une des revendications 1 à 4 par addition dans la composition d'au moins un dérivé (S) choisi parmi :
- un ose (S1) comprenant de 3 à 8 atomes de carbone ;
- un oligomère d'ose (S2) comprenant de 1 à 10 motifs en ose ;
- un produit (S3) issu de la dégradation d'un saccharide.

15. Méthode selon la revendication 14 :
- pour laquelle le rapport (S/P) des quantités en poids secs de dérivé (S) et de polymère (P) va de 0,1 à 10 ou de 0,2 à 5 ou de 0,3 à 5, de préférence de 0,5 à 4 ou de 0,6 à 3, ou
- pour laquelle la composition comprend au moins un ingrédient choisi parmi :
- un matériau minéral sous forme de particules, de préférence un matériau défini selon la revendication 9 ;
- un agent liant, de préférence un agent liant (c) défini selon l'une des revendications 10 et 11 ;
- un agent épaississant, de préférence un agent épaississant (d) défini selon l'une des revendications 10 et 11.

## Patentansprüche

1. Wässriges Dispergiermittel, umfassend:
- mindestens ein Polymer (P), hergestellt durch mindestens eine radikalische Polymerisationsreaktion, bei einer Temperatur von über 50 °C, aus mindestens einem anionischen Monomer (M1), umfassend mindestens eine polymerisierbaren olefinische Ungesättigtheit und mindestens eine Carbonsäurefunktion oder eines ihrer Salze, in Gegenwart von mindestens einer radikalbildenden Verbindung, ausgewählt aus Wasserstoffperoxid, Benzylperoxid, Acetylperoxid, Laurylperoxid, Tert-Butylhydroperoxid, Cumolhydroperoxid, Ammoniumpersulfat, einem Alkalimetallpersulfat, einer Azoverbindung, Kombinationen davon und ihren jeweiligen Assoziationen mit einem Ion, ausgewählt aus Fe^{II}, Fe^{III}, Cu^{I}, Cu^{II} und Kombinationen davon;
- mindestens ein Derivat (S), ausgewählt aus:
o einem Monosaccharid (S1) mit 3 bis 8 Kohlenstoffatomen;
o einem oligomeren Monosaccharid (S2) mit 1 bis 10 Monosacchard-Motiven;
o einem Produkt (S3), das durch Abbau eines Saccharids hergestellt wird.

2. Mittel nach Anspruch 1, wobei:
- die Polymerisationsreaktion ebenfalls in Gegenwart von mindestens einer Verbindung mit Phosphor mit Oxidationsgrad I umgesetzt wird, vorzugsweise einer Verbindung, die ausgewählt ist aus hypophosphoriger Säure (H₃PO₂) und einem Derivat der hypophosphorigen Säure (H₃PO₂), vorzugsweise einer Verbindung mit mindestens einem Hypophosphit-Ion (H₂PO₂⁻), bevorzugt einer Verbindung, ausgewählt aus Natriumhypophosphit (H₂PO₂Na), Kaliumhypophosphit (H₂PO₂K), Calciumhypophosphit ([H₂PO₂]₂Ca) und Kombinationen davon; oder
- die Polymerisationsreaktion ebenfalls in Gegenwart mindestens einer Verbindung mit einem Bisulfit-Ion umgesetzt wird, vorzugsweise einer Verbindung, die ausgewählt ist aus Ammoniumbisulfit, Alkalimetallbisulfit, insbesondere Natriumbisulfit, Kaliumbisulfit, Calciumbisulfit, Magnesiumbisulfit und Kombinationen davon; oder
- die Polymerisationsreaktion in Gegenwart mindestens einer Verbindung mit Phosphor mit Oxidationsgrad III umgesetzt wird, vorzugsweise einer Verbindung, die ausgewählt ist aus Phosphorsäure und einem Derivat der Phosphorsäure, vorzugsweise einer Verbindung, die mindestens ein Phosphit-Ion hat, insbesondere einer Verbindung, die ausgewählt ist aus Natriumphosphit, Calciumphosphit, Kaliumphosphit, Ammoniumphosphit und Kombinationen davon; oder
- die Polymerisationsreaktion ebenfalls bei 0,05 bis 5 Gew.-%, bezogen auf die Gesamtmenge an Monomeren, umgesetzt wird, wobei mindestens eine Verbindung ausgewählt ist aus einem Xanthat-Derivat, einer Mercaptan-Verbindung und einer Verbindung mit der Formel (I): 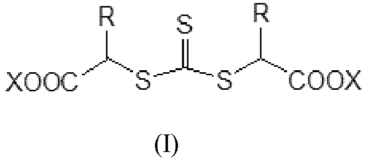 wobei:
- X unabhängig H, Na oder K darstellt,
- R unabhängig eine C₁-C₅-Alkylgruppe, vorzugsweise eine Methylgruppe darstellt; insbesondere eine Verbindung mit der Formel (I), d. h. Dinatriumtrithiocarbonat-Diisopropionat (DPTTC - CAS-Nummer 6332-91-8); oder
- die Polymerisationsreaktion auch in Gegenwart mindestens einer reduzierenden Verbindung umgesetzt wird, z. B. einer Verbindung, die ausgewählt ist aus Hydroxylaminsulfat, Hydazinhydrat und Kombinationen davon; oder
- die Polymerisationsreaktion unter Luftdruck und bei einer Temperatur von 50 bis 98 °C oder von 75 bis 99 °C, vorzugsweise von 50 bis 95 °C oder von 50 bis 85 °C, umgesetzt wird; bei einem Druck, der über dem Luftdruck liegt, und bei einer Temperatur von über 100 °C, vorzugsweise unter 140 °C; oder
- die Polymerisationsreaktion in Wasser, in einem Lösungsmittel, allen oder im Gemisch mit Wasser, insbesondere einem alkoholischen Lösungsmittel, vor allem Isopropylalkohol, vorzugsweise in Wasser, erfolgt; oder
- das Polymer (P), ganz oder teilweise, insbesondere nach der Polymerisationsreaktion neutralisiert wird; vorzugsweise durch mindestens ein Derivat, das ausgewählt ist aus einem Alkalimetall, Erdalkalimetall, Aminoderivat, Ammoniak, Ammoniakwasser und deren Kombinationen, insbesondere ein Derivat mit mindestens einem Element, ausgewählt aus Lithium, Natrium, Calcium, Magnesium und deren Kombinationen, zum Beispiel NaOH, KOH, Ca(OH)₂, Mg(OH)₂, ein Aminoderivat, ausgewählt aus Monoisopropylamin (AMP), Triethylamin, Diethylamin, Monoethylamin und Kombinationen davon; oder
- die Polymerisationsreaktion Folgendes umsetzt, bezogen auf den gesamten Gewichtsanteil an Monomeren:
∘ 100 Gew.-% des anionischen Monomers (M1) oder
∘ 50 Gew.-% bis 99,5 Gew.-% oder 70 Gew.-% bis 99,5 Gew.-% des anionischem Monomers (M1) und 0,5 Gew.-% bis 50 Gew.-% bzw. 0,5 Gew.-% bis 30 Gew.-% mindestens eines anderen Monomers.

3. Dispergiermittel nach einem der Ansprüche 1 bis 2, wobei das anionische Monomer (M1), das mindestens eine polymerisierbare olefinische Ungesättigtheit hat, eine oder zwei Carbonsäurefunktionen beinhaltet, vorzugsweise eine einzige Carbonsäurefunktion, bevorzugterweise ausgewählt aus Acrylsäure, Methacrylsäure, Itaconsäure, einem Salz der Acrylsäure, einem Salz der Methacrylsäure, einem Salz der Itaconsäure und Kombinationen davon, noch mehr bevorzugt Acrylsäure.

4. Mittel nach einem der Ansprüche 1 bis 3, bei dem die Polymerisationsreaktion ebenfalls mindestens ein weiteres Monomer einsetzt, das ausgewählt ist aus:
- einem anderen anionischen Monomer (M1), vorzugsweise einem Monomer, ausgewählt aus Acrylsäure, Methacrylsäure, Itaconsäure, Maleinsäure, Maleinsäureanhydrid und Kombinationen davon;
- mindestens einem nicht-ionischen Monomer (M2) mit mindestens einer polymerisierbaren olefinischen Ungesättigtheit, vorzugsweise mindestens einer polymerisierbaren ethylenischen Ungesättigtheit und vor allem einer polymerisierbaren funktionellen Vinylgruppe, noch mehr bevorzugt einem nicht-ionischen Monomer (M2), ausgewählt aus Styrol, Vinylcaprolactam, den Estern einer Säure mit mindestens einer Monocarbonsäurefunktion, insbesondere einem Ester einer Säure, ausgewählt aus Acrylsäure, Methacrylsäure und Kombinationen davon, beispielsweise Hydroxyethylacrylat, Hydroxypropylacrylat, Hydroxyethylmethacrylat, Hydroxypropylmethacrylat, Alkylacrylat, insbesondere C₁-C₁₀-Alkylacrylat, vorzugsweise C₁-C₄-Alkylacrylat, noch mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, noch mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat;
- mindestens einem Monomer (M3), das ausgewählt ist aus 2-Acrylamido-2-methylpropansulfonsäure, einem Salz der 2-Acrylamido-2-methylpropansulfonsäure, 2-(Methacryloyloxy)ethansufonsäure, einem Salz der 2-(Methacryloyloxy)ethansufonsäure, Natriummethallylsulfonat, Styrolsulfonat, phosphatiertes Hydroxyethylacrylat, phosphatiertes Hydroxypropylacrylat, phosphatiertes Hydroxyethylmethacrylat, phosphatiertes Hydroxypropylmethacrylat und Kombinationen davon und Mischungen davon;
- mindestens einem Monomer (M4) mit der Formel (II): 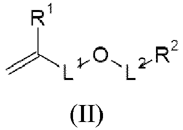 wobei:
- R¹ und R² gleich oder verschieden sein können und unabhängig H oder CH₃ darstellen,
- L¹ unabhängig eine Gruppe darstellt, die ausgewählt ist aus C(O), CH₂, CH₂-CH₂ und O-CH₂-CH₂-CH₂-CH₂,
- L² unabhängig eine Gruppe darstellt, die ausgewählt ist aus (CH₂-CH₂O)ₓ, (CH₂CH(CH₃)O)_{y}, (CH(CH₃)CH₂O)_{z} und Kombinationen davon, und
- x, y und z, die gleich oder verschieden sein können, unabhängig eine Ganzzahl oder Dezimalzahl zwischen 0 und 150 darstellen, wobei die Summe x+y+z zwischen 10 und 150 liegt;
- mindestens einer Verbindung (M5) mit der Formel (III):
R¹-(OE)ₘ-(OP)ₙ-R² (III)
wobei:
- m und n, die gleich oder unterschiedlich sein können, unabhängig 0 oder eine Ganzzahl oder eine Dezimalzahl unter 150 darstellen, wobei m oder n ungleich 0 ist,
- OE eine Gruppe CH₂CH₂O darstellt,
- OP unabhängig eine Gruppe darstellt, die ausgewählt ist aus CH(CH₃)CH₂O und CH₂CH(CH₃)O,
- R¹ eine Gruppe mit mindestens einer polymerisierbaren olefinischen Ungesättigtheit darstellt, vorzugsweise eine Gruppe, die ausgewählt ist aus Acrylat, Methacrylat, Acrylurethan, Methacrylurethan, Vinyl, Allyl, Methallyl und Isoprenyl, noch mehr bevorzugt eine Methacrylat-Gruppe,
- R² eine lineare, verzweigte oder zyklische, gesättigte, ungesättigte oder aromatische Kohlenwasserstoffgruppe darstellt, die 6 bis 40 Kohlenstoffatome hat, vorzugsweise eine C₆-C₄₀-Alkylgruppe, die linear oder verzweigt ist, insbesondere eine C₈-C₃₀-Alkylgruppe, die linear oder verzweigt ist, eine C₆-C₄₀-Arylgruppe, vorzugsweise eine C₈-C₃₀-Arylgruppe, beispielsweise eine Tristyrylphenyl-Gruppe;
- mindestens einem Monomer (M6), ausgewählt aus:
- Polyalkylenglycolacrylat, vorzugsweise Polyethylenglycolacrylat oder Polyethylen-Polypropylenglycolacrylat,
- Polyalkylenglycolmethacrylat, vorzugsweise Polyethylenglycolmethacrylat oder Polyethylen-Polypropylenglycolmethacrylat,
- Allylpolyalkylenglycol, vorzugsweise Allylpolyethylenglycol oder Allylpolyethylen-Polypropylenglycol,
- Methallylpolyalkylenglycol, vorzugsweise Methallylpolyethylenglycol oder Methallylpolyethylen-Polypropylenglycol,
- 3-Methyl-3-buten-1-ylpolyalkylenglycol, vorzugsweise 3-Methyl-3-buten-1-ylpolyethylenglycol oder 3-Methyl-3-buten-1-ylpolyethylen-polypropylenglycol,
- Polyalkylenglycol-Acrylatphosphat, vorzugsweise Polyethylenglycol-Acrylatphosphat oder Polyethylen-Polypropylenglycol-Acrylatphosphat,
- Polyalkylenglycol-Methacrylatphosphat, vorzugsweise Polyethylenglycol-Methacrylatphosphat oder Polyethylen-Polypropylenglycol-Methacrylatphosphat,
- Allylpolyalkylenglycolphosphat, vorzugsweise Allylpolyethylenglycolphosphat oder Allylpolyethylen-Polypropylenglycolphosphat,
- Methallylpolyalkylenglycolphosphat, vorzugsweise Metallylpolyethylenglycolphosphat oder Ethallylpolyethylen-Polypropylenglycolphosphat,
- 3-Methyl-3-buten-1-ylpolyalkylenglycolphosphat, vorzugsweise 3-Methyl-3-buten-1-ylpolyethylenglycolphosphat oder 3-Methyl-3-buten- 1-ylpolyethylenpolypropylenglycolphosphat;
- mindestens einem Monomer (M7), das ausgewählt ist aus einer vernetzten Verbindung und einem Monomer mit mindestens zwei olefinischen Ungesättigtheiten.

5. Mittel nach einem der Ansprüche 1 bis 4, wobei das Derivat (S) ausgewählt ist aus:
- einem Monosaccharid (S1), ausgewählt aus Tritriosen (Monosaccharide mit 3 Kohlenstoffatomen), Tetrosen (Monosaccharide mit 4 Kohlenstoffatomen), Pentosen (Monosaccharide mit 5 Kohlenstoffatomen), Hexosen und Desoxyhexosen (Monosaccharide mit 6 Kohlenstoffatomen), Heptosen (Monosaccharide mit 7 Kohlenstoffatomen), Octosen (Monosaccharide mit 8 Kohlenstoffatomen); vorzugsweise ausgewählt aus Glycerinaldehyd, Dihydroxyaceton, Erythrose, Threose, Erythrulose, Desoxyribose, Ribose, Arabinose, Xylose, Lyxose, Ribulose, Xylulose, Allose, Altrose, Galactose, Glucose, Gulose, Idose, Mannose, Talose, Fructose, Psicose, Sorbose, Tagatose, Fucose, Rhamnose, Sedoheptulose, Mannoheptulose, Heptahydroxyoctanal ;
- einem Oligomer (S2), ausgewählt aus Dimeren der Monosaccharide, Trimeren der Monosaccharide; vorzugsweise ausgewählt aus Dextrose, Maltose, Lactose, Saccharose, Maltoriose, Maltotetraose, Alpha-Glucoheptonsäure, Beta-Glucoheptonsäure;
- einem Produkt (S3), ausgewählt aus Aldosen, synthetischen Derivaten der Monosaccharide, synthetischen Derivaten der Disaccharide; vorzugsweise ausgewählt aus Sorbitol, Mannitol, Gluconsäure, Citronensäure, Isocitronensäure, Milchsäure, Weinsäure, die Salze dieser Säuren.

6. Mittel nach einem der Ansprüche 1 bis 5, wobei das Derivat (S) ausgewählt ist aus Sorbitol, Mannitol, Gluconsäure, Citronensäure, Isocitronensäure, Milchsäure, Weinsäure, den Salzen dieser Säuren, Dextrose, Maltose, Glucose, einer Mischung aus Glucose und Maltose, Lactose, Saccharose, Maltotriose, Maltotetraose, Alpha-Glucoheptonsäure, Beta-Glucoheptonsäure, den Salzen dieser Säuren und den Kombinationen dieser Derivate.

7. Mittel nach einem der Ansprüche 1 bis 6, wobei das Verhältnis (S/P) der Mengen an Trockengewicht Derivat (S) und Polymer (P) von 0,1 bis 10 oder von 0,2 bis 5 oder von 0,3 bis 5, vorzugsweise von 0,5 bis 4 oder von 0,6 bis 3, reicht.

8. Wässrige Zusammensetzung, umfassend:
(a) mindestens ein Dispergiermittel nach einem der Ansprüche 1 bis 7;
(b) mindestens einen Mineralwerkstoff in Partikelform.

9. Zusammensetzung nach Anspruch 8, wobei:
- die Partikel aus Mineralwerkstoff einen durchschnittlichen Durchmesser von weniger als 500 µm, weniger als 200 µm oder 100 µm oder weniger als 50 µm besitzen oder einen durchschnittlichen Durchmesser von 0,05 µm bis 50 µm oder einen durchschnittlichen Durchmesser von weniger als 10 µm, vorzugsweise weniger als 5 µm oder 2 µm, ebenfalls bevorzugt weniger als 1 µm oder weniger als 0,5 µm, haben; oder
- nur ein Mineralwerkstoff (a) oder zwei oder drei Mineralwerkstoffe (a) verwendet werden; oder
- der Mineralwerkstoff (a) synthetischen Ursprungs oder natürlichen Ursprungs ist, vorzugsweise ausgewählt aus Erdalkalimetallcarbonaten, vorzugsweise Calciumcarbonat (natürliches Calciumcarbonat oder ausgefälltes Calciumcarbonat), Strontiumcarbonat, Magnesiumcarbonat, Bariumcarbonat, Dolomit, Kaolin, calciniertes Kaolin, Titandioxid, Eisenoxid, Talk, Calciumsulfat, Bariumsulfat, Siliciumdioxiden, Mica, Zinkoxid; noch mehr bevorzugt Calciumcarbonat (natürliches Calciumcarbonat oder ausgefälltes Calciumcarbonat), Titandioxid, Kaolin und calciniertes Kaolin.

10. Wässrige Zusammensetzung nach einem der Ansprüche 8 bis 9, ebenfalls umfassend:
- mindestens ein Bindemittel (c) natürlichen oder synthetischen Ursprungs, vorzugsweise ein natürliches Bindemittel, wie Stärke, Carboxymethylcellulose (CMC), Hydroxyethylcellulosen, Polyvinylalkohol (PV-OH), Casein, Proteinen, Alginaten, oder ein synthetisches Bindemittel, wie Latex, vorzugsweise ausgewählt aus einem Styrol-Butadien-Polymer, einem Styrol-Acryl-Polymer, einem Styrol-Acetat-Polymer, noch mehr bevorzugt einem Styrol-Butadien-Polymer; oder
- mindestens ein Verdickungsmittel (d) natürlichen oder synthetischen Ursprungs, vorzugsweise ausgewählt aus einer Polymeremulsion, einem HASE-Polymer, einem ASE-Polymer, einem HEUR-Polymer, einem Polyurethanpolymer, einem sterischen Verdickungspolymer, einem Polyacrylamidpolymer, CMC, einem CMC-Derivat und Kombinationen davon.

11. Wässrige Zusammensetzung, vorzugsweise wässrige Zusammensetzung für eine Streichmasse in der Papierindustrie, nach einem der Ansprüche 8 bis 10, mit:
- 0,02 bis 2 Trockengew.-% Dispergiermittel (a),
- 30 bis 75 Trockengew.-% Mineralwerkstoff (b),
- 2 bis 25 Trockengew.-% Bindemittel (c),
- 0,01 bis 2 Trockengew.-% Verdickungsmittel (d) und
- 22,97 bis 42,98 Gew.-% Wasser.

12. Wässrige Zusammensetzung nach einem der Ansprüche 8 bis 11 ebenfalls mit mindestens einem Hilfsstoff, insbesondere mindestens einem Hilfsstoff, ausgewählt aus Dispergiermitteln, Antischaummitteln, bioziden Mitteln, Färbemitteln, Schmiermitteln und optischen Aufhellungsmitteln.

13. Verwendung mindestens eines Dispergiermittels nach einem der Ansprüche 1 bis 7:
- für die Herstellung einer wässrigen Zusammensetzung, vorzugsweise für die Herstellung einer wässrigen Zusammensetzung nach einem der Ansprüche 8 bis 12, mit:
- Zugabe des Dispergiermittels zu einer wässrigen Suspension mindestens eines Mineralwerkstoffs in Partikelform, oder
- Zugabe mindestens eines Mineralwerkstoffs in Partikelform zu einer wässrigen Zusammensetzung mit mindestens einem Dispergiermittel, oder
- für die Herstellung einer wässrigen Zusammensetzung, ausgewählt aus einer Zusammensetzung für eine Streichmasse in der Papierindustrie, vorzugsweise für die Herstellung einer Primärbeschichtung von Papier (Vorschicht) oder einer Endbeschichtung von Papier (Deckschicht); einer Beschichtungszusammensetzung, vorzugsweise für Farbe oder Lack; einer Tintenzusammensetzung, vorzugsweise einer Tintenzusammensetzung für Tintenstrahldrucker; einer Pflegezusammensetzung, vorzugsweise einer Pflegezusammensetzung für Körper oder Haare; einer Zusammensetzung zur Bodenverbesserung.

14. Verfahren zur Kontrolle der Rheologie einer wässrigen Zusammensetzung mit mindestens einem Polymer (P) nach einem der Ansprüche 1 bis 4 durch Zugabe zur Zusammensetzung mindestens eines Derivats (S), ausgewählt aus:
- einem Monosaccharid (S1) mit 3 bis 8 Kohlenstoffatomen;
- einem oligomeren Monosaccharid (S2) mit 1 bis 10 Monosacchardmustern;
- einem Produkt (S3), das durch Abbau eines Saccharids hergestellt wird.

15. Verfahren nach Anspruch 14:
- wobei das Verhältnis (S/P) der Mengen an Trockengewicht Derivat (S) und Polymer (P) von 0,1 bis 10 oder von 0,2 bis 5 oder von 0,3 bis 5, vorzugsweise von 0,5 bis 4 oder von 0,6 bis 3, reicht; oder
- wobei die Zusammensetzung mindestens einen Inhaltsstoff enthält, der ausgewählt ist aus:
- einem Mineralwerkstoff in Partikelform, vorzugsweise einem Material nach Anspruch 9;
- einem Bindemittel, vorzugsweise einem Bindemittel (c) nach einem der Ansprüche 10 bis 11;
- einem Verdickungsmittel, vorzugsweise einem Verdickungsmittel (d) nach einem der Ansprüche 10 bis 11.

## Claims

1. An aqueous dispersing agent comprising:
- at least one polymer (P) prepared by at least one radical polymerisation reaction, at a temperature greater than 50°C, of at least one anionic monomer (M1) comprising at least one polymerisable olefinic unsaturation and at least one carboxylic acid group or of one of its salts, in the presence of at least one radical-generating compound chosen among hydrogen peroxide, benzoyl peroxide, acetyl peroxide, lauryl peroxide, tert-butyl hydroperoxide, cumene hydroperoxide, ammonium persulphate, an alkali metal persulphate, an azo compound, their respective combinations and associations with an ion chosen among Fe^{II}, Fe^{III}, Cu^{I}, Cu^{II} and combinations thereof;
- at least one derivative (S) chosen among:
o an ose (S1) comprising from 3 to 8 carbon atoms;
o an ose oligomer (S2) comprising from 1 to 10 ose units;
o a product (S3) resulting from the degradation of a saccharide.

2. The agent according to claim 1, in which:
- the polymerisation reaction is also carried out in the presence of at least one compound comprising phosphorus in the oxidation I state, preferably a compound chosen among hypophosphorous acid (H₃PO₂) and a derivative of hypophosphorous acid (H₃PO₂), preferably a compound comprising at least one hypophosphite ion (H₂PO₂⁻), more preferentially a compound chosen among sodium hypophosphite (H₂PO₂Na), potassium hypophosphite (H₂PO₂K), calcium hypophosphite ([H₂PO₂] ₂Ca) and combinations thereof; or
- the polymerisation reaction is also carried out in the presence of at least one compound comprising a bisulphite ion, preferably a compound chosen among ammonium bisulphite, an alkali metal bisulphite, in particular sodium bisulphite, potassium bisulphite, calcium bisulphite, magnesium bisulphite and combinations thereof; or
- the polymerisation reaction is carried out in the presence of at least one compound comprising phosphorus in the oxidation III state, preferably a compound chosen among phosphorous acid and a phosphorous acid derivative, more preferentially a compound comprising at least one phosphite ion, in particular a compound chosen among sodium phosphite, calcium phosphite, potassium phosphite, ammonium phosphite and combinations thereof; or
- the polymerisation reaction is also carried out in the presence of between 0.05 and 5% by weight, relative to the total amount of monomers, of at least one compound chosen among a xanthate derivative, a mercaptan compound and a compound of formula (I): 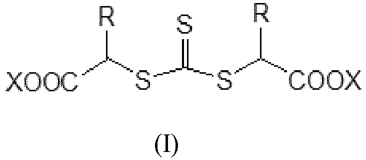 wherein:
- X independently represents H, Na or K,
- R independently represents a C₁-C₅-alkyl group, preferably a methyl group; particularly a compound of formula (I) which is disodium 2,2'-(thiocarbonylbisthio)dipropanoate (DPTTC - CAS number 6332-91-8); or
- the polymerisation reaction is also carried out in the presence of at least one reducing compound, for example a compound chosen among hydroxylamine sulphate, hydrazine hydrate and combinations thereof; or
- the polymerisation reaction is carried out at atmospheric pressure and at a temperature ranging from 50 to 98°C or from 75 to 99°C, preferably from 50 to 95°C or from 50 to 85°C; at a pressure greater than atmospheric pressure and at a temperature greater than 100°C, preferably less than 140°C; or
- the polymerisation reaction is carried out in water, in a solvent, alone or in a mixture with water, particularly an alcoholic solvent, in particular isopropyl alcohol, preferably in water; or
- the polymer (P) is completely or partially neutralised, in particular at the end of the polymerisation reaction; preferably by means of at least one derivative chosen among an alkali metal, an alkaline earth metal, an amine derivative, ammoniac, ammonia and combinations thereof, in particular a derivative comprising at least one element chosen among lithium, sodium, calcium, magnesium and combinations thereof, for example NaOH, KOH, Ca(OH)₂, Mg(OH)₂, an amine derivative chosen among monoisopropylamine (AMP), triethylamine, diethylamine, monoethylamine and combinations thereof; or
- the polymerisation reaction uses, relative to the total amount by weight of monomers:
∘ 100% by weight of anionic monomer (M1) or
o from 50% to 99.5% or from 70% to 99.5% by weight of anionic monomer (M1) and, respectively, from 0.5% to 50% or from 0.5% to 30% by weight of at least one other monomer.

3. The dispersing agent according to one of claims 1 and 2, in which the anionic monomer (M1) comprising at least one polymerisable olefinic unsaturation comprises one or two carboxylic acid groups, preferably comprises a single carboxylic acid group, preferably is chosen among acrylic acid, methacrylic acid, itaconic acid, an acrylic acid salt, a methacrylic acid salt, an itaconic acid salt and combinations thereof, more preferentially acrylic acid.

4. The dispersing agent according to one of claims 1 to 3, in which the polymerisation reaction also uses at least one other monomer chosen among:
- another anionic monomer (M1), preferably a monomer chosen among acrylic acid, methacrylic acid, itaconic acid, maleic acid, maleic anhydride and combinations thereof;
- at least one non-ionic monomer (M2) comprising at least one polymerisable olefinic unsaturation, preferably at least one polymerisable ethylenic unsaturation and in particular a polymerisable vinyl group, more preferentially a non-ionic monomer (M2) chosen among styrene, vinylcaprolactam, the esters of an acid comprising at least one monocarboxylic acid group, in particular an ester of an acid chosen among acrylic acid, methacrylic acid and combinations thereof, for example hydroxyethyl acrylate, hydroxypropyl acrylate, hydroxyethyl methacrylate, hydroxypropyl methacrylate, alkyl acrylate, in particular C₁-C₁₀-alkyl acrylate, preferentially C₁-C₄-alkyl acrylate, more preferentially methyl acrylate, ethyl acrylate, propyl acrylate, isobutyl acrylate, n-butyl acrylate, alkyl methacrylate, in particular C₁-C₁₀-alkyl methacrylate, preferentially C₁-C₄-alkyl methacrylate, more preferentially methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate;
- at least one monomer (M3) chosen among 2-acrylamido-2-methylpropanesulphonic acid, a 2-acrylamido-2-methylpropanesulphonic acid salt, 2-(methacryloyloxy)ethanesulphonic acid, a 2-(methacryloyloxy)ethanesulphonic acid salt, sodium methallyl sulphonate, styrene sulphonate, hydroxyethyl-acrylate phosphate, hydroxypropyl-acrylate phosphate, hydroxyethyl methacrylate phosphate, hydroxypropyl-methacrylate phosphate and combinations and mixtures thereof;
- at least one monomer (M4) of formula (II): 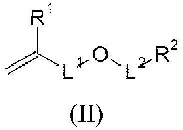 wherein:
- R¹ and R², identical or different, independently represent H or CH₃,
- L¹ independently represents a group chosen among C(O), CH₂, CH₂-CH₂ and O-CH₂-CH₂-CH₂-CH₂,
- L² independently represents a group chosen among (CH₂-CH₂O)ₓ, (CH₂CH(CH₃)O)_{y}, (CH(CH₃)CH₂O)_{z} and combinations thereof and
- x, y and z, identical or different, independently represent an integer or decimal comprised in a range from 0 to 150 and the sum of x+y+z is comprised in a range from 10 to 150;
- at least one compound (M5) of formula (III):
R¹-(EO)ₘ-(PO)ₙ-R² (III)
wherein:
- m and n, identical or different, independently represent 0 or an integer or decimal less than 150, m or n being different from 0,
- EO represents a CH₂CH₂O group,
- PO independently represents a group chosen among CH(CH₃)CH₂O and CH₂CH(CH₃)O,
- R¹ represents a group comprising at least one polymerisable olefinic unsaturation, preferably a group chosen among acrylate, methacrylate, acryl urethane, methacryl urethane, vinyl, allyl, methallyl and isoprenyl, more preferentially a methacrylate group,
- R² represents a straight, branched or cyclical, saturated, unsaturated or aromatic hydrocarbon group comprising from 6 to 40 carbon atoms, preferably a straight or branched C₆-C₄₀ alkyl group, preferably a straight or branched C₈-C₃₀ alkyl group, a C₆-C₄₀ aryl group, preferably a C₈-C₃₀ aryl group, for example a tristyryl phenyl group;
- at least one monomer (M6) chosen among:
- polyalkylene glycol acrylate, preferably polyethylene glycol acrylate or polyethylene-polypropylene glycol acrylate,
- polyalkylene glycol methacrylate, preferably polyethylene glycol methacrylate or polyethylene-polypropylene glycol methacrylate,
- allyl polyalkylene glycol, preferably allyl polyethylene glycol or allyl polyethylene-polypropylene glycol,
- methallyl polyalkylene glycol, preferably methallyl polyethylene glycol or methallyl polyethylene-polypropylene glycol,
- 3-methyl-3-buten-1-ylpolyalkylene glycol, preferably 3-methyl-3-buten-1-ylpolyethylene glycol or 3-methyl-3-buten-1-ylpolyethylene-polypropylene glycol,
- polyalkylene glycol acrylate phosphate, preferably polyethylene glycol acrylate phosphate or polyethylene-polypropylene glycol acrylate phosphate,
- polyalkylene glycol methacrylate phosphate, preferably polyethylene glycol methacrylate phosphate or polyethylene-polypropylene glycol methacrylate phosphate,
- allyl polyalkylene glycol phosphate, preferably allyl polyethylene glycol phosphate or allyl polyethylene-polypropylene glycol phosphate,
- methallyl polyalkylene glycol phosphate, preferably methallyl polyethylene glycol phosphate or ethallyl polyethylene-propylene glycol phosphate,
- 3-methyl-3-buten-1-ylpolyalkylene glycol phosphate, preferably 3-methyl-3-buten-1-ylpolyethylene glycol phosphate or 3-methyl-3-buten-1-ylpolyethylene-polypropylene glycol phosphate,
at least one monomer (M7) chosen among a cross-linking compound and a monomer comprising at least two olefinic unsaturations.

5. The agent according to one of claims 1 to 4, in which the derivative (S) is chosen among:
- an ose (S1) chosen among trioses (oses comprising 3 carbon atoms), tetroses (oses comprising 4 carbon atoms), pentoses (oses comprising 5 carbon atoms), hexoses and deoxyhexoses (oses comprising 6 carbon atoms), heptoses (oses comprising 7 carbon atoms), octoses (oses comprising 8 carbon atoms); preferably chosen among glyceraldehyde, dihydroxyacetone, erythrose, threose, erythrulose, deoxyribose, ribose, arabinose, xylose, lyxose, ribulose, xylulose, alloxyribose, altrose, galactose, glucose, gulose, idose, mannose, talose, fructose, psicose, sorbose, tagatose, fucose, rhamnose, sedoheptulose, mannoheptulose, heptahydroxyoctanal;
- an oligomer (S2) chosen among ose dimers, ose trimers; preferably chosen among dextrose, maltose, lactose, sucrose, maltoriose, maltotetraose, alpha-glucoheptonic acid, beta-glucoheptonic acid;
- a product (S3) chosen among aldoses, synthetic monosaccharide derivatives, synthetic disaccharide derivatives; preferably chosen among sorbitol, mannitol, gluconic acid, citric acid, isocitric acid, lactic acid, tartaric acid, salts of these acids.

6. The agent according to one of claims 1 to 5, in which the derivative (S) is chosen among sorbitol, mannitol, gluconic acid, citric acid, isocitric acid, lactic acid, tartaric acid, salts of these acids, dextrose, maltose, glucose, a mixture of glucose and of maltose, lactose, sucrose, maltoriose, maltotetraose, alpha-glucoheptonic acid, beta-glucoheptonic acid, salts of these acids and combinations of these derivatives.

7. The agent according to one of claims 1 to 6, in which the (S/P) ratio of the dry weight amounts of derivative (S) and of polymer (P) ranges from 0.1 to 10 or from 0.2 to 5 or from 0.3 to 5, preferably from 0.5 to 4 or from 0.6 to 3.

8. An aqueous composition comprising:
(a) at least one dispersing agent defined according to one of claims 1 to 7;
(b) at least one mineral material in particle form.

9. The composition according to claim 8, in which:
- the particles of mineral material have an average diameter of less than 500 µm, less than 200 µm or less than 100 µm or less than 50 µm or even an average diameter ranging from 0.05 µm to 50 µm or an average diameter of less than 10 µm, preferably less than 5 µm or less than 2 µm, also preferentially less than 1 µm or less than 0.5 µm; or
- a single mineral material (a) or two or three mineral materials (a) are used; or
- the mineral material (a) is of synthetic or natural origin, preferably chosen among the alkaline-earth metal carbonates, preferably calcium carbonate (natural calcium carbonate or precipitated calcium carbonate), strontium carbonate, magnesium carbonate, barium carbonate , dolomite, kaolin, calcined kaolin, titanium dioxide, iron oxide, talcum, calcium sulphate, barium sulphate, silicas, mica, zinc oxide; more preferentially calcium carbonate (natural calcium carbonate or precipitated calcium carbonate), titanium dioxide, kaolin or calcined kaolin.

10. The aqueous composition according to one of claims 8 and 9, also comprising:
- at least one bonding agent (c) of natural or synthetic origin, preferably a natural bonding agent such as starch, carboxymethyl cellulose (CMC), hydroxyethyl celluloses, polyvinyl alcohol (PV-OH), casein, proteins, alginates, or a synthetic bonding agent such as latex, preferably chosen among a styrene-butadiene polymer, a styrene-acrylic polymer, a styrene-acetate polymer, more preferentially a styrene-butadiene polymer; or
- at least one thickening agent (d) of natural or synthetic origin, preferably chosen among a polymeric emulsion, a HASE polymer, an ASE polymer, a HEUR polymer, a polyurethane polymer, a steric thickening polymer, a polyacrylamide polymer, CMC, a CMC derivative and combinations thereof.

11. The aqueous composition, preferably an aqueous paper coating colour composition, according to one of claims 8 to 10, comprising:
- from 0.02 to 2% by dry mass of dispersing agent (a),
- from 30 to 75% by dry mass of mineral material (b),
- from 2 to 25% by dry mass of bonding agent (c),
- from 0.01 to 2% by dry mass of thickening agent (d) and
- from 22.97 to 42.98% by mass of water.

12. The aqueous composition according to one of claims 8 to 11, also comprising at least one admixture, in particular at least one admixture chosen among dispersing agents, anti-foaming agents, biocides, colouring agents, lubricants and optical brighteners.

13. A use of at least one dispersing agent defined according to one of claims 1 to 7:
- in the preparation of an aqueous composition, preferably in the preparation of an aqueous composition defined according to one of claims 8 to 12, comprising:
- the addition of the dispersing agent in an aqueous suspension of at least one mineral material in particle form or
- the addition of at least one mineral material in particle form in an aqueous composition comprising at least one dispersing agent or
- in the preparation of an aqueous composition chosen among a paper coating colour composition, preferably for the preparation of a primary paper coating layer (pre-coat) or of a final paper coating layer (top coat); a coating composition, preferably a paint composition or a varnish composition; an ink composition, preferably an ink composition for an inkjet printer; a care composition, preferably a body or hair care composition; a soil amendment composition.

14. A method for controlling the rheology of an aqueous composition comprising at least one polymer (P) defined according to one of claims 1 to 4 by adding to the composition at least one derivative (S) chosen among:
- an ose (S1) comprising from 3 to 8 carbon atoms;
- an ose oligomer (S2) comprising from 1 to 10 ose units;
- a product (S3) resulting from the degradation of a saccharide.

15. The method according to claim 14:
- in which the (S/P) ratio of the dry weight amounts of derivative (S) and of polymer (P) ranges from 0.1 to 10 or from 0.2 to 5 or from 0.3 to 5, preferably from 0.5 to 4 or from 0.6 to 3 or
- in which the composition comprises at least one ingredient chosen among:
- a mineral material in particle form, preferably a material defined according to claim 9;
- a bonding agent, preferably a bonding agent (c) defined according to one of claims 10 and 11;
- a thickening agent, preferably a thickening agent (d) defined according to one of claims 10 and 11.
